# EUROPEAN PATENT SPECIFICATION

(11) **EP 3 685 989 B1**
(45) Date of publication and mention of the grant of the patent: **15.03.2023**
(21) Application number: 18858479.1
(22) Date of filing: 18.09.2018
(51) Int. Cl.: B29C 64/124, B33Y 70/00, B33Y 80/00, C08F 299/02, B25J 15/00, B33Y 10/00, B22F 1/00

(54) **OBJECT-GRIPPING ATTACHMENT AND INDUSTRIAL ROBOT USING OBJECT-GRIPPING ATTACHMENT**
GREIFVORRICHTUNG FÜR GEGENSTÄNDE UND INDUSTRIEROBOTER MIT GREIFVORRICHTUNG FÜR GEGENSTÄNDE
ACCESSOIRE DE SAISIE D'OBJETS ET ROBOT INDUSTRIEL UTILISANT UN ACCESSOIRE DE SAISIE D'OBJETS

(30) Priority: 22.09.2017 JP 2017182478
(43) Date of publication of application: 29.07.2020
(73) Proprietor: Konica Minolta, Inc., Tokyo 100-7015 (JP)
(72) Inventor: YONEZAKI, Ayumi, Tokyo100-7015 (JP)
(74) Representative: Henkel & Partner mbB
(86) International application number: PCT/JP2018/034507
(87) International publication number: WO 2019/059184

(56) References cited:
- EP-A1- 2 502 728
- EP-A1- 2 764 935
- WO-A1-2010/073422
- WO-A1-2016/108519
- WO-A1-2016/108519
- WO-A1-2016/133759
- WO-A1-2017/040890
- WO-A1-2017/053783
- JP-A- S51 128 370
- JP-A- 2003 306 217
- JP-A- 2016 190 942
- JP-A- 2017 052 870
- JP-A- 2017 052 870
- JP-A- 2017 518 898
- US-A- 5 807 519
- US-A1- 2009 108 605
- US-A1- 2017 120 535
- US-A1- 2017 173 872

## Description

### Technical Field

The present invention relates to an object-gripping attachment and an industrial robot using the object-gripping attachment.

### Background Art

Various methods capable of relatively easily producing a three-dimensional shaped object having a complex shape have been developed recently. As one method for producing a three-dimensional shaped object, there is known a method in which a liquid resin composition containing an active energy ray-curable compound is selectively irradiated with an active energy ray to cure the resin composition into a desired shape (for example, PLT 1). In the method described in PLT 1, first, a resin composition is irradiated with an active energy ray to form a cured product (layer) corresponding to one of the layers into which a three-dimensional shaped object is narrowly divided in its thickness direction. Thereafter, a layer composed of a liquid resin composition is further formed on the cured product and irradiated with an active energy ray to cure the composition into a desired shape. Then, the formation of a layer composed of the liquid resin composition and the curing of the layer are repeated to form a three-dimensional shaped object of a desired shape.

Here, from the viewpoint of controlling the flowability of a resin composition to be used in a method such as that of PLT 1 to thereby improve the dimensional accuracy of a three-dimensional shaped object to be obtained, addition of a large amount of metal particles to the resin composition is suggested (PLT 2).

As another method for producing a three-dimensional shaped object, there is also known a method in which a heat-melted filament-shaped thermoplastic resin is extruded onto a stage and laminated one layer by one layer to thereby form a three-dimensional shaped object (PLT 3). There is suggested a technique to add metal particles to a filament-shaped resin composition to thereby impart conductivity to a three-dimensional shaped object to be obtained (PLT 4).

Methods in which a liquid resin composition containing a radical polymerizable compound is continuously cured have been recently suggested as a novel method for producing a three-dimensional shaped object (PLTs 5 and 6). In the methods, first, a buffer region, in which the resin composition is not cured even when the composition is irradiated with an active energy ray, and a region for curing, in which the resin composition is cured by irradiation with an active energy ray are provided in a shaping tank. At this time, each region is formed such that the buffer region is positioned on the bottom part side of the shaping tank and the region for curing is positioned on the upper part side of the shaping tank. Then, a carrier to be the base point for three-dimensional shaping is placed in the region for curing, and the region for curing is selectively irradiated with an active energy ray from the buffer region (shaping tank bottom part) side. This leads to formation of a part of a three-dimensional shaped object (a cured product of the resin composition) on the carrier surface. Then, continuous irradiation of the carrier with an active energy ray while the carrier being elevated toward the shaping tank upper part side causes a cured product of the resin composition to be continuously formed under the carrier to thereby produce a seamless three-dimensional shaped object.

The above buffer region is a region to be provided such that the shaping tank and the cured product of the resin composition do not come in contact with each other. Usually, to the buffer region, a polymerization inhibitor (for example, oxygen) for inhibiting curing of the resin composition by the active energy ray is continuously supplied.

Here, incorporation of magnetic material into binding bands for use in production lines of various manufacturing industries has been suggested (PLT 7). According the technique, it is possible to detect fragments of binding bands or the like included in products with a metal detector. Such binding bands are formed by injection molding or the like.

PLT 8 discloses a method of producing a plastic mold that has excellent thermal and mechanical properties, as well as good resistance against use. The method comprises the steps of (a) forming a layer of a photocurable resin composition comprising 100 weight parts of a photocurable liquid, an effective amount of photoinitiator, 50 to 400 weight parts of a filler per 100 weight parts of the photocurable liquid, and less than 5 weight parts of salt of phosphoric acid ester per 100 weight parts of the filler, (b) exposing the layer to actinic radiation to at least partially photocure the layer, (c) forming another layer of the photocurable resin composition on the at least partially photocured layer, (d) exposing the another layer to actinic radiation and thereby photocuring the another layer at least partially, (e) repeating the steps of forming another layer and exposing the another layer and thereby obtaining a photocured layered structure having a glass transition temperature of 70 to 120°C, and (f) subjecting the photocured layered structure to a post-cure process at a post-cure temperature which is higher than the glass transition temperature by 30 to 100°C thereby producing a plastic mold.

The photocurable liquid consists of unsaturated urethane having a total of three or more methacryloyl groups and acryloyl groups as radical polymerizable groups per molecule and an average molecular weight per radical polymerizable group of 150 to 250 and a vinyl monomer which is N-(meth)acrylate morpholine or a mixture of N-(meth)acrylate morpholine and di-ol di(meth)acrylate at weight ratio of (unsaturated urethane)/(vinyl monomer) = 80/20 to 30/70. The filler is a mixture of inorganic fine particles and inorganic whiskers of average fiber length 1 to 70 µm both surface-treated with (meth)acryloyl modified silane or vinyl modified silane. The salt of phosphoric acid ester is a compound of the general formula (ROYO)ₘ-P(O)(OB)ₙ, wherein R is a hydrocarbon group having 1-6 carbon atoms, Y is a residual group obtained by removing hydroxyl groups of polyether di-ol, B is monoamine base, and m and n are each 1 or 2 such that m+n = 3.

PLT 9 discloses a method of forming a three-dimensional object that can obviate the need for mechanical separation steps in "bottom-up" fabrication. The method comprises the steps of (a) providing a carrier and an optically transparent member having a build surface, the carrier and the build surface defining a build region therebetween, (b) filling the build region with a polymerizable liquid, and (c) irradiating the build region through the optically transparent member to form a solid polymer from the polymerizable liquid while concurrently advancing the carrier away from the build surface to form the three-dimensional object from the solid polymer, while also concurrently (i) continuously maintaining a dead zone of polymerizable liquid in contact with the build surface by electrochemically generating a polymerization inhibitor therein from a precursor of the polymerization inhibitor, and (ii) continuously maintaining a gradient of polymerization zone (e.g., an active surface) between the dead zone and the solid polymer and in contact with each thereof, the gradient of polymerization zone comprising the polymerizable liquid in partially cured form. In one embodiment, the polymerization inhibitor is oxygen,

Documents US 2017/120535 A1 and US 2009/108605 A1 disclose grippers additively manufactured from curable material. In particular, US 2009/108605 A1 discloses the preamble of claim 1.

### Citation List

### Patent Literatures

PLT 1: JP H08-174680 A
PLT 2: JP 2006-348214 A
PLT 3: JP 5751388 B1
PLT 4: JP 2017-095694 A
PLT 5: JP 2016-509962 A
PLT 6: JP 2016-509964 A
PLT 7: WO 2010/087038 A1
PLT 8: US 5,807,519 A
PLT 9: WO 2016/133759 A1

### Summary of Invention

### Technical Problem

Use of a resin member in the distal end of the arm of industrial robots, that is, the gripping section or the like has been considered recently. Such a gripping section is required to have a shape suited to the shape of various products and additionally required to have high strength, tensile strength, and the like. Conventional resin molding has been generally performed by an injection molding method, but the injection molding method has a problem in that the shape flexibility is low and it is difficult to form a shape suited to each product. In shaping methods using a filament described in PLTs 3 and 4, there is a problem in that the dimensional accuracy of fine portions is not sufficient.

It is thus considered that a method including irradiating a liquid resin composition with an active energy ray, as described in PLTs 1, 5, or 6, is applied. According to the method, it is possible to produce the gripping section in accordance with the shape of various products with high dimensional accuracy. However, three-dimensional shaped objects obtained from conventional resin compositions have problems in that the tensile strength and the like are not sufficient and in that, in the case where the gripping section is broken during production of products, the presence or absence of fragments included cannot be detected. Addition of metal particles to the resin composition can thus be considered, but as in PLT 2, for example, when a liquid resin composition has a large amount of metal particles, the viscosity of the resin composition increases and the air that has entered into the resin composition is more unlikely to escape. As a result, there have been problems in that cavities are likely to occur in a three-dimensional shaped object to be obtained and the tensile strength thereof rather deceases and the like. In contrast, when the amount of metal particles to be added in the resin composition is reduced, the viscosity of the resin composition decreases, and cavities are more unlikely to occur in a three-dimensional shaped object. However, when the viscosity of the resin composition decreases, the metal particles sediment or aggregate. As a result, there have been problems in that detectability by a metal detector is insufficient, in that it is difficult to sufficiently enhance the tensile strength, and the like.

The present invention has been made in view of the above problems. That is to say, an object of the present invention is to provide a resin composition from which a three-dimensional shaped object is obtained, the three-dimensional shaped object having high tensile strength and dimensional accuracy and additionally having good detectability by a metal detector. The invention is defined by the claims.

### Solution to Problem

In a first aspect, the present invention thus relates to an object-gripping attachment as defined in claim 1. The object-gripping attachment is capable of being detachably attached to an arm section of an industrial robot and comprises a three-dimensional shaped object, wherein the three-dimensional shaped object is a cured product of a resin composition configured for producing the three-dimensional shaped object by selectively irradiating the liquid resin composition with an active energy ray. The resin composition comprises (i) a photocurable compound and (ii) metal-containing particles that are detectable by a metal detector and are surface-modified with a surface modifier, wherein a content of the metal-containing particles is 10 mass% or more and 55 mass% or less based on the solid content of the resin composition, the solid content of the resin composition meaning the total amount of components which remain in the resin composition when the resin composition is cured.

In a second aspect, the present invention relates to an industrial robot as defined in claim 8. The industrial robot comprises: a conveying section that conveys an object; an arm section that grips and operates the object conveyed by the conveying section; and a metal detecting section that inspects the object operated by the arm section, wherein the object-gripping attachment of the first aspect is detachably attached to the arm section.

Preferred variants of the object-gripping attachment of the present invention are defined in the subclaims.

### Advantageous Effects of Invention

By using a resin composition as defined above, it is possible to produce a three-dimensional shaped object having a high tensile strength and dimensional accuracy and additionally having good detectability by a metal detector.

### Brief Description of Drawings

FIG. 1 schematically illustrates an apparatus for producing a three-dimensional shaped object;
FIG. 2A and FIG. 2B schematically illustrate another apparatus for producing a three-dimensional shaped object; and
FIG. 3 schematically illustrates a part of an industrial robot according to one embodiment of the present invention.

### Description of Embodiments

As mentioned above, in order to impart detectability by a metal detector to a three-dimensional shaped object or to enhance the strength of the three-dimensional shaped object, addition of metal particles to a liquid resin composition has been considered. However, a liquid resin composition has a problem in that, with a large amount of metal particles, air is more likely to enter into the resin composition and the tensile strength of a three-dimensional shaped object is rather likely to decrease. In contrast, when the amount of the metal particles is reduced, the metal particles are likely to sediment or aggregate because the viscosity of the resin composition is low. In this case, there has been a problem in that it is not possible to sufficiently enhance the strength of the three-dimensional shaped object and furthermore, the detectability by a metal detector is not sufficient.

Against such problems, the resin composition used in the present invention contains a photocurable compound and metal-containing particles detectable by a metal detector, and the metal-containing particles have been modified with a surface modifier. Accordingly, the metal-containing particles have good dispersibility in the resin composition, and sedimentation or aggregation of the metal-containing particles is unlikely to occur even when the viscosity of the resin composition is low. When the photocurable compound is a radical polymerizable compound, polymerization of the radical polymerizable compound may be inhibited by oxygen attached to the surface of a filler. In the present invention, the surface of the metal-containing particles is treated by a surface modifier treatment, and thus, there is an advantage in that such oxygen inhibition is unlikely to occur.

The amount of the metal-containing particles contained in the resin composition is 10 mass% or more and 55 mass% or less based on the total amount of the photocurable compound and the metal-containing particles. Thus, the viscosity of the resin composition does not increase excessively, and if air enters into the resin composition, air is likely to escape. Meanwhile, since a certain amount of the metal-containing particles is contained in the resin composition, sufficient detectability by a metal detector can be obtained.

Hereinbelow, the resin composition will be described first, and then, a method for producing a three-dimensional shaped object using the resin composition will be described.

### 1. Resin Composition

A resin composition used in the present invention contains a photocurable compound and metal-containing particles. The resin composition usually further contains a polymerization initiator for initiating polymerization of the photocurable compound. The resin composition may further contain, for example, a resin other than the photocurable compound such as a thermally polymerizable resin, a thickener, various additives, and the like.

### 1-1. Photocurable Compound

The photocurable compound contained in the resin composition is only required to be a compound that can be polymerized and cured by irradiation with an active energy ray, and may be a monomer, may be an oligomer, may be a prepolymer, or may be a mixture thereof. The photocurable compound also may be a radical polymerizable compound or may be a cationic polymerizable compound. However, as mentioned below, in a resin composition for use in a method of producing a three-dimensional shaped object while a polymerization suppressor such as oxygen is added to the resin composition (hereinafter also referred to as the "CLIP method"), the photocurable compound has to be a radical polymerizable compound.

The resin composition may contain only one photocurable compound or may contain two or more photocurable compounds. Examples of the active energy ray to cure the photocurable compound include ultraviolet rays, X-rays, electron rays, γ-rays, and visible light rays.

The type of radical polymerizable compound, which is one of photocurable compounds, is not particularly limited as long as the compound has a group that is radical-polymerizable by irradiation with an active energy ray in the presence of a radical polymerization initiator and the like, and the radical polymerizable compound can be a compound having one or more of, for example, an ethylene group, a propenyl group, a butenyl group, a vinylphenyl group, an allyl ether group, a vinyl ether group, a maleimide group, a (meth)acrylamide group, an acetyl vinyl group, a vinylamide group, a (meth)acryloyl group, and the like in the molecule. Among these, the compound is preferably an unsaturated carboxylate compound containing one or more unsaturated carboxylate structures in the molecule mentioned below, or an unsaturated carboxylic acid amide compound containing one or more unsaturated carboxylic acid amide structures in the molecule mentioned below. More specifically, the compound is particularly preferably a (meth)acrylate-based compound containing a (meth)acryloyl group and/or a (meth)acrylamide-based compound mentioned below. Herein, the description of "(meth)acryl" denotes methacryl and/or acryl, the description of "(meth)acryloyl" denotes methacryloyl and/or acryloyl, and the description of "(meth)acrylate" denotes methacrylate and/or acrylate.

Examples of the "compound having an allyl ether group" as one of the radical polymerizable compounds described above include phenyl allyl ether, o-, m- or p-cresol monoallyl ether, biphenyl-2-ol monoallyl ether, biphenyl-4-ol monoallyl ether, butyl allyl ether, cyclohexyl allyl ether, cyclohexanemethanol monoallyl ether, phthalic acid diallyl ether, isophthalic acid diallyl ether, dimethanoltricyclodecane diallyl ether, 1,4-cyclohexane dimethanol diallyl ether, alkylene (having 2 to 5 carbon atoms) glycol diallyl ether, polyethylene glycol diallyl ether, glycerin diallyl ether, trimethylolpropane diallyl ether, pentaerythritol diallyl ether, polyglycerin (having a degree of polymerization of 2 to 5) diallyl ether, trimethylolpropane triallyl ether, glycerin triallyl ether, pentaerythritol tetraallyl ether and tetraallyloxyethane, pentaerythritol triallyl ether, diglycerin triallyl ether, sorbitol triallyl ether, and polyglycerin (having a degree of polymerization of 3 to 13) polyallyl ether.

Examples of the "compound having a vinyl ether group" described above include butyl vinyl ether, butyl propenyl ether, butyl butenyl ether, hexyl vinyl ether, 1,4-butanediol divinyl ether, ethylhexyl vinyl ether, phenyl vinyl ether, benzyl vinyl ether, ethylethoxy vinyl ether, acetylethoxyethoxy vinyl ether, cyclohexyl vinyl ether, tricyclodecane vinyl ether, adamantyl vinyl ether, cyclohexanedimethanol divinyl ether, tricyclodecanedimethanol divinyl ether, EO adduct divinyl ether of bisphenol A, cyclohexanediol divinyl ether, cyclopentadiene vinyl ether, norbomyldimethanol divinyl ether, divinyl resorcin, divinyl hydroquinone, ethylene glycol divinyl ether, diethylene glycol divinyl ether, triethylene glycol divinyl ether, propylene glycol divinyl ether, dipropylene glycol vinyl ether, butylene divinyl ether, dibutylene glycol divinyl ether, 4-cyclohexane divinyl ether, oxanorbomene divinyl ether, neopentyl glycol divinyl ether, glycerin trivinyl ether, oxetane divinyl ether, glycerin ethylene oxide adduct trivinyl ether (having a mole number of ethylene oxide added of 6), trimethylolpropane trivinyl ether, trivinyl ether ethylene oxide adduct trivinyl ether (having a mole number of ethylene oxide added of 3), pentaerythritol trivinyl ether, ditrimethylolpropane hexavinyl ether, and oxyethylene adducts thereof.

Examples of the "compound having a maleimide group" described above include phenylmaleimide, cyclohexylmaleimide, and n-hexylmaleimide.

Examples of the "(meth)acrylamide-based compound" described above include (meth)acrylamide, N,N-dimethyl (meth)acrylamide, N-ethyl (meth)acrylamide, N-isopropyl (meth)acrylamide, N-hydroxyethyl (meth)acrylamide, N-butyl (meth)acrylamide, isobutoxymethyl (meth)acrylamide, diacetone(meth)acrylamide, bismethyleneacrylamide, di(ethyleneoxy)bispropylacrylamide, tri(ethyleneoxy)bispropylacrylamide, and (meth)acryloylmorpholine.

Meanwhile, examples of the "(meth)acrylate-based compound" mentioned above include monofunctional (meth)acrylate monomers including isoamyl (meth)acrylate, stearyl (meth)acrylate, lauryl (meth)acrylate, butyl (meth)acrylate, pentyl (meth)acrylate, octyl (meth)acrylate, isooctyl (meth)acrylate, isononyl (meth)acrylate, decyl (meth)acrylate, isodecyl (meth)acrylate, tridecyl (meth)acrylate, isomyristyl (meth)acrylate, isostearyl (meth)acrylate, dicyclopentenyloxyethyl (meth)acrylate, dicyclopentenyl (meth)acrylate, 2-ethylhexyl (meth)acrylate, dimethylaminoethyl (meth)acrylate, diethylaminoethyl (meth)acrylate, 2-ethylhexyl-diglycol (meth)acrylate, 2-(meth)acryloyloxyethyl hexahydrophthalate, methoxyethoxyethyl (meth)acrylate, butoxyethyl (meth)acrylate, ethoxy diethylene glycol (meth)acrylate, methoxy diethylene glycol (meth)acrylate, methoxy polyethylene glycol (meth)acrylate, methoxy propylene glycol (meth)acrylate, phenoxyethyl (meth)acrylate, pentachlorophenyl (meth)acrylate, pentabromophenyl (meth)acrylate, tetrahydrofurfuryl (meth)acrylate, dicyclopentanyl (meth)acrylate, cyclohexyl (meth)acrylate, isonorbomyl (meth)acrylate, polyethylene glycol mono(meth)acrylate, polypropylene glycol mono(meth)acrylate, glycerin (meth)acrylate, 7-amino-3,7-dimethyloctyl (meth)acrylate, 2-hydroxyethyl (meth)acrylate, 2-hydroxypropyl (meth)acrylate, 2-hydroxybutyl (meth)acrylate, 2-hydroxy-3-phenoxypropyl (meth)acrylate, benzyl (meth)acrylate, 2-(2-ethoxyethoxy)ethyl (meth)acrylate, 2-ethylhexyl carbitol (meth)acrylate, 2-(meth)acryloyloxyethyl succinate, 2-(meth)acryloyloxyethyl phthalate, 2-(meth)acryloyloxyethyl-2-hydroxyethyl-phthalate, 2-(meth)acryloyloxyethyl hexahydrophthalate, and t-butylcyclohexyl (meth)acrylate;
bifunctional (meth)acrylate monomers including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, cyclohexane di(meth)acrylate, cyclohexane dimethanol di(meth)acrylate, neopentyl glycol di(meth)acrylate, tricyclodecane diyldimethylene di(meth)acrylate, dimethylol-tricyclodecane di(meth)acrylate, polyester di(meth)acrylate, bisphenol A PO adduct di(meth)acrylate, hydroxypivalic acid neopentyl glycol di(meth)acrylate, polytetramethylene glycol di(meth)acrylate, polyethylene glycol di(meth)acrylate, tripropylene glycol di(meth)acrylate, and tricyclodecane dimethanol di(meth)acrylate;
trifunctional or higher functional (meth)acrylatemonomers including trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, ditrimethylolpropane tetra(meth)acrylate, dipentaerythritol monohydroxy penta(meth)acrylate, glycerinpropoxy tri(meth)acrylate, and pentaerythritol ethoxy tetra(meth)acrylate;
and oligomers thereof.

The "(meth)acrylate-based compounds" may be compounds obtained by further modifying various (meth)acrylate monomers or oligomers thereof (modified products). Examples of the modified product include ethylene oxide-modified (meth)acrylatemonomers such as triethylene glycol diacrylate, polyethylene glycol diacrylate, ethylene oxide-modified trimethylolpropane tri(meth)acrylate, ethylene oxide-modified pentaerythritol tetraacrylate, ethylene oxide-modified bisphenol A di(meth)acrylate, and ethylene oxide-modified nonylphenol (meth)acrylate; propylene oxide-modified (meth)acrylate monomers such as tripropylene glycol diacrylate, polypropylene glycol diacrylate, propylene oxide-modified trimethylolpropane tri(meth)acrylate, propylene oxide-modified pentaerythritol tetraacrylate, and propylene oxide-modified glycerin tri(meth)acrylate; caprolactone-modified (meth)acrylate monomers such as caprolactone-modified trimethylolpropane tri(meth)acrylate; and caprolactam-modified (meth)acrylate monomers such as caprolactam-modified dipentaerythritol hexa(meth)acrylate.

The "(meth)acrylate-based compounds" may further be compounds obtained by (meth)acrylating various oligomers (hereinafter also referred to as "modified (meth)acrylate-based compounds"). Examples of such a modified (meth)acrylate-based compound include polybutadiene (meth)acrylate-based compounds, polyisoprene (meth)acrylate-based compounds, epoxy (meth)acrylate-based compounds, urethane (meth)acrylate-based compounds, silicone (meth)acrylate-based compounds, polyester (meth)acrylate-based compounds, and linear (meth)acryl-based compounds. Among these, particularly, epoxy (meth)acrylate-based compounds, urethane (meth)acrylate-based compounds, and silicone (meth)acrylate-based compounds can be suitably used. Allowing the resin composition to contain such an epoxy (meth)acrylate-based compound, urethane (meth)acrylate-based compound, or silicone (meth)acrylate-based compound is preferred in terms of an improved strength of a three-dimensional shaped object to be obtained.

The epoxy (meth)acrylate-based compound is only required to be a compound including one or more epoxy groups and one or more (meth)acrylate groups in a molecule, and examples thereof include bisphenol A-type epoxy (meth)acrylate, bisphenol F-type epoxy (meth)acrylate, bisphenyl-type epoxy (meth)acrylate, triphenolmethane-type epoxy (meth)acrylate, and novolac-type epoxy (meth)acrylates such as cresol novolac-type epoxy (meth)acrylate and phenol novolac-type epoxy (meth)acrylate.

The urethane (meth)acrylate-based compound can be a compound having a urethane bond and a (meth)acryloyl group, obtained by reacting an aliphatic polyisocyanate compound having two isocyanate groups or an aromatic polyisocyanate compound having two isocyanate groups with a (meth)acrylic acid derivative having a hydroxy group or the like.

Examples of the isocyanate compound as a raw material for the urethane (meth)acrylate-based compounds include isophorone diisocyanate, 2,4-tolylene diisocyanate, 2,6-tolylene diisocyanate, hexamethylene diisocyanate, trimethylhexamethylene diisocyanate, diphenylmethane-4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanatephenyl)thiophosphate, tetratetramethylxylylene diisocyanate, and 1,6,11-undecane triisocyanate.

Examples of the isocyanate compound as a raw material for the urethane (meth)acrylate-based compounds also include chain-extended isocyanate compounds obtained by a reaction between a polyol such as ethylene glycol, propylene glycol, glycerin, sorbitol, trimethylolpropane, carbonate diol, polyether diol, polyester diol, or polycaprolactone diol and an excess of an isocyanate compound.

Meanwhile, examples of the (meth)acrylic acid derivative having a hydroxy group as a raw material for the urethane (meth)acrylate-based compounds include hydroxyalkyl (meth)acrylates such as 2-hydroxyethyl (meth)acrylate, 2-hydroxypropyl (meth)acrylate, 2-hydroxybutyl (meth)acrylate, and 4-hydroxybutyl (meth)acrylate; mono(meth)acrylates of a dihydric alcohol such as ethylene glycol, propylene glycol, 1,3-propanediol, 1,3-butanediol, 1,4-butanediol, or polyethylene glycol; mono(meth)acrylates or di(meth)acrylates of a trihydric alcohol such as trimethylolethane, trimethylolpropane, or glycerin; and epoxy (meth)acrylates such as bisphenol A-type epoxy acrylate.

The urethane (meth)acrylate-based compound having the above structure may be a commercially available one, and examples thereof include M-1100, M-1200, M-1210, M-1600 (all manufactured by Toagosei Co., Ltd.), EBECRYL210, EBECRYL220, EBECRYL230, EBECRYL270, EBECRYL1290, EBECRYL2220, EBECRYL4827, EBECRYL4842, EBECRYL4858, EBECRYL5129, EBECRYL6700, EBECRYL8402, EBECRYL8803, EBECRYL8804, EBECRYL8807, EBECRYL9260 (all manufactured by DAICEL-ALLNEX LTD.), Art Resin UN-330, Art Resin SH-500B, Art Resin UN-1200TPK, Art Resin UN-1255, Art Resin UN-3320HB, Art Resin UN-7100, Art Resin UN-9000A, Art Resin UN-9000H (all manufactured by Negami chemical industrial Co., Ltd.), U-2HA, U-2PHA, U-3HA, U-4HA, U-6H, U-6HA, U-6LPA, U-10H, U-15HA, U-108, U-108A, U-122A, U-122P, U-324A, U-340A, U-340P, U-1084A, U-2061BA, UA-340P, UA-4000, UA-4100, UA-4200, UA-4400, UA-5201P, UA-7100, UA-7200, UA-W2A (all manufactured by Shin-Nakamura Chemical Co., Ltd.), and AH-600, AI-600, AT-600, UA-1011, UA-101T, UA-306H, UA-306I, UA-306T (all manufactured by KYOEISHA CHEMICAL Co., LTD.).

Meanwhile, the urethane (meth)acrylate-based compound may be a block isocyanate obtained by blocking isocyanate groups of a polyisocyanate with a blocking agent having a (meth)acrylate group.

The polyisocyanate to be used for obtaining a block isocyanate may be the "isocyanate compound" mentioned above or may be a compound obtained by reacting the compound with a polyol or polyamine. Examples of the polyol include conventionally known polyols, polyester polyols, polymer polyols, vegetable oil polyols, additionally flame-retardant polyols such as phosphorus-containing polyols and halogen-containing polyols. One of these polyols may be contained in the block isocyanate or two or more of these may be contained therein.

Examples of the polyether polyol to be reacted with isocyanate or the like include compounds prepared by an addition reaction between a compound having at least two or more active hydrogen groups (specifically, a polyhydric alcohol such as ethylene glycol, propylene glycol, glycerin, trimethylolpropane, or pentaerythritol; an amine such as ethylenediamine; an alkanolamine such as ethanolamine or diethanolamine; or the like) and an alkylene oxide (specifically, ethylene oxide, propylene oxide, or the like). The method for preparing the polyether polyol can be, for example, the method described in Gunter Oertel, "Polyurethane Handbook" (1985) Hanser Publishers, LLC (German), p. 42-53.

Examples of the polyester polyol include products of a condensation reaction between a polyvalent carboxylic acid such as adipic acid or phthalic acid and a polyhydric alcohol such as ethylene glycol, 1,4-butanediol, and 1,6-hexanediol, wastes from nylon production, trimethylolpropane, wastes of pentaerythritol, wastes of phthalic acid-based polyesters, and polyester polyols derived from waste products after treatment (for example, see the description in Keiji Iwata, "Polyurethane Resin Handbook" (1987) THE NIKKAN KOGYO SHIMBUN, LTD. p.117).

Examples of the polymer polyol include polymer polyols obtained by reacting the polyether polyol with an ethylenic unsaturated monomer (for example, butadiene, acrylonitrile, styrene, or the like) in the presence of a radical polymerization catalyst. The polymer polyol preferably has a molecular weight of the order of 5000 to 12000.

Examples of the vegetable oil polyol include hydroxyl group-containing vegetable oils such as castor oil and coconut oil. Also preferably used are castor oil derivative polyols obtained using castor oil or hydrogenated castor oil as a raw material. Examples of the castor oil derivative polyol include castor oil polyesters obtained by a reaction among castor oil, a polyvalent carboxylic acid, and a short-chain diol, and alkylene oxide adducts of castor oil or castor oil polyesters.

Examples of the flame-retardant polyol include phosphorous-containing polyols obtained by adding an alkylene oxide to a phosphoric acid compound; halogen-containing polyols obtained by ring-opening polymerization of epichlorohydrin or trichlorobutylene oxide; aromatic-based ether polyols obtained by adding an alkylene oxide to an active hydrogen compound having an aromatic ring; and aromatic-based ester polyols obtained by a condensation reaction between a polyvalent carboxylic acid having an aromatic ring and a polyhydric alcohol.

The hydroxyl value of the polyol to be reacted with isocyanate or the like is preferably 5 to 300 mgKOH/g, more preferably 10 to 250 mgKOH/g. The hydroxyl value can be measured by the method defined in JIS-K0070.

Examples of the polyamine to be reacted with isocyanate or the like include ethylenediamine, diethylenetriamine, triethylenetetramine, hexamethylenepentamine, bisaminopropylpiperazine, tris(2-aminoethyl)amine, isophoronediamine, polyoxyalkylenepolyamine, diethanolamine, and triethanolamine.

Meanwhile, the blocking agent for blocking isocyanate groups of a polyisocyanate is only required to be one that has a (meth)acryloyl group, reacts with an isocyanate group, and can be removed by heating.

Specific examples of such a blocking agent include t-butylaminoethyl methacrylate (TBAEMA), t-pentylaminoethyl methacrylate (TPAEMA), t-hexylaminoethyl methacrylate (THAEMA), t-butylaminopropyl methacrylate (TPAEMA), t-hexylaminoethyl methacrylate (THAEMA), and t-butylaminopropyl methacrylate (TBAPMA).

A blocking reaction of a polyisocyanate can be performed generally at -20 to 150°C, and is performed preferably at 0 to 100°C. At 150°C or less, it is possible to prevent side reactions, and, in contrast, at -20°C or more, it is possible to set the reaction rate within a moderate range. The blocking reaction between a polyisocyanate compound and a blocking agent can be performed irrespective of the presence of a solvent. When a solvent is used, it is preferred to use a solvent inert to isocyanate groups. In the blocking reaction, a reaction catalyst can be used. Examples of a specific reaction catalyst include organometallic salts of tin, zinc, and lead, metal alcoholates, and tertiary amines.

When a blocked isocyanate prepared as mentioned above is used as a radical polymerizable compound, first, the acryloyl group moiety is polymerized by light irradiation. Then, the blocking agent is removed by heating. This removal enables an isocyanate compound produced to newly polymerize with a polyol, polyamine, or the like to thereby give a three-dimensional shaped object containing polyurethane, polyurea, or a mixture thereof.

Meanwhile, the silicone (meth)acrylate-based compound can be a compound obtained by adding (meth)acrylic acid to the terminal and/or side chain of a silicone having a polysiloxane bond in the main chain. Silicone as a raw material of a silicone (meth)acrylate-based compound can be an organopolysiloxane obtained by polymerizing a known monofunctional, bifunctional, trifunctional, or tetrafunctional silane compounds (for example, alkokysilane) in any combination. Specific examples of the silicone acrylate include, in addition to commercially available TEGO Rad 2500 (trade name: manufactured by Tego Chemie Service GmbH), compounds obtained by esterifying an organo-modified silicone having -OH groups, such as X-22-4015 (trade name: manufactured by Shin-Etsu Chemical Co., Ltd.), and acrylic acid under an acid catalyst; and compounds obtained by reacting an organo-modified silane compound, such as epoxysilane, for example, KBM402 or KBM403 (trade name: both manufactured by Shin-Etsu Chemical Co., Ltd.) with acrylic acid.

Meanwhile, the type of cationic polymerizable compound, as another example of the photocurable compound, is not particularly limited as long as the compound has a group that is cationic polymerizable by irradiation with an active energy ray in the presence of an acid catalyst. Examples thereof include cyclic hetero compounds, and compounds having a cyclic ether group are preferred from the viewpoint of the reactivity and the like.

Specific examples of the cationic polymerizable compound include oxirane compounds such as oxirane, methyloxirane, phenyloxirane, and 1,2-diphenyloxirane, or epoxy group-containing compounds in which a hydrogen atom in the oxirane ring is replaced by a methylene linking group or methine linking group such as glycidyl ether, glycidyl ester, or glycidyl amine; epoxy group-containing compounds having a cycloalkane ring such as 2-(cyclohexylmethyl)oxirane, 2-ethoxy-3-(cyclohexylmethyl)oxirane, [(cyclohexyloxy)methyl]oxirane, and 1,4-bis(oxiranylmethoxymethyl)cyclohexane; alicyclic epoxy group-containing compound having no aromatic ring such as 7-oxabicyclo[4.1.0]heptane, 3-methyl-7-oxabicyclo[4.1.0]heptane, 7-oxabicyclo[4.1.0]heptane-3-ylmethanol, and 7-oxabicyclo[4.1.0]heptane-3-methoxymethyl; alicyclic epoxy group-containing compounds having an aromatic ring such as 3-phenyl-7-oxabicyclo[4.1.0]heptane-3-carboxylate, 4-ethylphenyl 7-oxabicyclo[4.1.0]heptane, benzyl 7-oxabicyclo[4.1.0]heptane-3-carboxylate, and 4-ethylphenyl 7-oxabicyclo[4.1.0]heptane-3-carboxylate;
oxetanyl group-containing compounds such as 3-ethyl-3-hydroxymethyloxetane, 1,4bis[(3-ethyl-3-oxetanyl)methoxymethyl]benzene, di(1-ethyl-3-oxetanyl)methyl ether, 3-ethyl-3-(phenoxymethyl)oxetane, 3-ethyl-3-(2-ethylhexyloxymethyl)oxetane, phenol novolac oxetane, and 3-ethyl-f (3-triethoxysilylpropoxy)methylloxetane; and
cyclic ether compounds having 5 or more-membered ring such as 2-methyltetrahydrofuran, 2,5-diethoxytetrahydrofuran, tetrahydrofuran-2,2-dimethanol 3-methyl-2,4(3H, 5H)-furandione, 2,4-dioxotetrahydrofuran-3-carboxylate, 1,5-di(tetrahydrofuran-2-yl)pentan-3-yl propanoate, 4-(2,5-dioxotetrahydrofuran-3-yl)-1,2,3,4-tetrahydronaphthalene-1,2-dicarboxylic acid anhydride, and methoxy tetrahydropyrane.

The total amount of the photocurable compound contained in the resin composition is preferably 10 to 90 mass%, more preferably 30 to 70 mass%, further preferably 40 to 60 mass% based on the total mass of the resin composition. When the amount of the photocurable compound is within the range, it is more likely to give a three-dimensional shaped object having a high strength.

### 1-2. Metal-containing particles

The metal-containing particles contained in the resin composition are particles that contain particles composed of a metal component detectable by a metal detector and additionally of which surface is modified with a surface modifier. The resin composition may contain one type of metal-containing particles or may contain two or more types of metal-containing particles.

Examples of the metal component contained in the metal-containing particles include transition metal magnetic materials, transition metal alloy magnetic materials, intermetallic compound magnetic materials, oxide magnetic materials, and nonmagnetic materials. Examples of the transition metal magnetic material include metals such as iron, cobalt, nickel, and chromium. Examples of the transition metal alloy magnetic material include iron-cobalt; iron-nickel; iron-nickel-cobalt-aluminum; manganese-aluminum-carbon magnet; and stainless steels such as martensitic, ferritic, or austenitic-ferritic. Examples of the stainless steel include martensitic stainless such as SUS403, 410, 410S, 420J1, 420J2, and 440A; ferritic stainless such as SUS405, 410L, 429, 430, 434, 436L, 445J1, 445J2, 444, 447J1, and XM27; and austenitic-ferritic stainless such as SUS329J1, 329J3L, and 329J4L. Examples of the oxide magnetic material include γ-iron oxide, triiron tetroxide, maghemite, barium magnets, and ferrite magnets. Examples of the nonmagnetic material include aluminum and copper.

Among those described above, stainless steel, iron, and iron oxide (y-iron oxide or triiron tetroxide) are preferable, and iron or iron oxide is preferable from the viewpoint of detectability by a metal detector. Since iron or iron oxide is unlikely to affect human body, the resin composition is especially useful when used for producing attachments of industrial robots mentioned below.

Meanwhile, the type of the surface modifier is not particularly limited as long as the surface modifier is a compound capable of enhancing the dispersibility of particles composed of a metal component. The surface modifier can be a compound having a group capable of binding to a functional group present on the surface of the metal component described above or capable of being adsorbed to the metal component and a group for enhancing the dispersibility to various components in the resin composition (for example, a photocurable compound and the like). Examples thereof include silane coupling agents, titanium coupling agents, and zirconium-based coupling agents. The presence or absence of surface treatment by a surface modifier can be identified by elementary analysis of a minute area by means of an EDS (energy dispersive X-ray spectrometer).

Herein, examples of the silane coupling agent are intended to include silane-based compounds having a reactive functional group such as a vinyl group or epoxy group as well as alkoxysilanes having an alkyl group and silazanes. Examples of the silane coupling agent include reactive functional group-containing alkoxysilanes such as vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3 -aminopropyltrimethoxysilane, 3 -aminopropyltrimethoxysilane, 3 -aminopropyltriethoxysilane, 3-triethoaysilyl-N-(1,3-dimethyl-butylidene)propylamine, N-phenyl-3-aminopropyltrimethoxysilane, 3-mercaptopropylmethyldimethoxysilane, 3-mercaptopropyltrimethoxysilane, and 3-isocyanate propyltriethoxysilane; alkyl group-containing alkoxysilanes such as methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, and trifluoropropyltrimethoxysilane; and silazanes such as hexamethyldisilazane.

Examples of the titanium coupling agent include n-propyltrimethoxy titanium, i-propyltriethoxy titanium, n-hexyltrimethoxy titanium, cyclohexyltriethoxy titanium, and phenyltrimethoxy titanium.

Examples of the zirconium-based coupling agent include zirconium tri-n-butoxy-ethyl acetoacetate, zirconium di-n-butoxy-bis(ethyl acetoacetate), zirconium n-butoxy-tris(ethyl acetoacetate), zirconium tetrakis(n-propyl acetoacetate), zirconium tetrakis(acetyl acetoacetate), zirconium tetrakis(ethyl acetoacetate), and zirconium di-n-butoxy-bis(acetylacetonato).

Each metal-containing particle may be a particle obtained by treating the surface of a particle composed of a metal component with one surface modifier or with two or more surface modifiers. The surface modifier is preferably a silane coupling agent among those described above, and from the viewpoint of the enhancement in the dispersibility of the metal-containing particles, the compatibility with a photocurable resin, the reactivity with the photocurable resin, and the like, the surface modifier is preferably vinyltrimethoxysilane, vinyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, or 3-acryloxypropyltrimethoxysilane. The surface modifier is particularly preferably 3-methacryloxypropylmethyldimethoxysilane, 3-methacryloxypropyltrimethoxysilane, 3-methacryloxypropylmethyldiethoxysilane, 3-methacryloxypropyltriethoxysilane, or 3-acryloxypropyltrimethoxysilane, which has high reactivity with a photocurable resin.

The method for preparing metal-containing particles is not particularly limited. The method can be, for example, the following method and the like. In the method, particles composed of a metal component are dispersed in any solvent, then, a surface modifier is added to the dispersion solution, and the solution is stirred. Thereafter, the solvent is removed by filtration or the like, and the particles are heat-dried. After the heat-drying, the particles obtained may be crushed in, for example, a ball mill or the like, as appropriate.

Here, the shape of the metal-containing particles contained in the resin composition is not particularly limited and may be, for example, spherical, flat, or fibrous. From the viewpoint of handleability and the like, the shape is preferably spherical.

When the metal-containing particles are spherical, the average particle size as measured by the dynamic scattering method is preferably 0.05 µm or more and 1 µm or less, more preferably 0.08 µm to 0.8 µm, even more preferably 0.1 µm to 0.5 µm. When the average particle size of the metal-containing particles is less than 0.05 µm, the interaction among particles tends to increase to thereby make aggregates more likely to generate. When the average particle size is 1 µm or more, the metal-containing particles tend to easily sediment in the resin composition. The average particle size can be measured by, for example, a particulate size distribution measurement apparatus (manufactured by Nikkiso Co., Ltd., Nanotrac UPA250EX), and the measurement conditions can be, for example, laser wavelength: 780 nm and measurement range: 0.8 to 6000 nm. When the metal-containing particles are flat and when the metal-containing particles are fibrous, the average value of the maximum particle size thereof is preferably within the above range. When the metal-containing particles are flat or fibrous, the aspect ratio (maximum particle size/minimum particle size) thereof is preferably 2 or more and 20 or less.

The amount of the metal-containing particles contained in the resin composition is 10 mass% or more and 55 mass% or less, more preferably 15 mass% or more and 50 mass% or less, even more preferably 20 mass% or more and 30 mass% or less based on the solid content of the resin composition. The "solid content" is herein defined as the total amount of the remaining components when the resin composition is cured, also including components that are liquid in the resin composition. When the amount of the metal particles contained in the resin composition is excessively large, the viscosity of the resin composition increases, and thus the air that has entered into the resin composition is more unlikely to escape. As a result, cavities are likely to occur in a three-dimensional shaped object, and the tensile strength and the like of the three-dimensional shaped object are likely to decrease. When the amount of the metal-containing particles contained in the resin composition is excessively small, the three-dimensional shaped object is more unlikely to be detected by a metal detector. In contrast, when the amount of the metal-containing particles is within the above range, the tensile strength of a three-dimensional shaped object to be obtained is likely to increase, and further, the detectability by a metal detector becomes satisfactory.

### 1-3. Polymerization Initiator

The resin composition usually contains a polymerization initiator that initiates polymerization of the above photocurable compound. The type of polymerization initiator is appropriately selected depending on the type of photocurable compound. For example, when the photocurable compound is a radical polymerizable compound, a radical polymerization initiator is contained. Meanwhile, when the photocurable compound is a cationic polymerizable compound, a cationic polymerization initiator such as a photoacid generating agent is contained.

The radical polymerization initiator is not particularly limited as long as being a compound capable of generating a radical on irradiation with an active energy ray, and can be a known radical polymerization initiator.

Examples of the radical polymerization initiator include 2-hydroxy-2-methyl-1-phenylpropan-1-one (manufactured by BASF SE, IRGACURE 1173 ("IRGACURE" is a trademark of the company) and the like), 2-hydroxy-1-{4-[4-(2-hydroxy-2-methyl-propionyl)-benzyl]phenyl}-2-methyl-propan-1-one (manufactured by BASF SE, IRGACURE 127 and the like), 1-[4-(2-hydroxyethoxy)-phenyl]-2-hydroxy-2-methyl-1-propan-1-one (manufactured by BASF SE, IRGACURE 2959 and the like), 2,2-dimethoxy-1,2-diphenylethan-1-one (manufactured by BASF SE, IRGACURE 651 and the like), benzyldimethylketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, 2-benzyl-2-dimethylamino-1-(4-morpholinophenyl)-butanone, benzoin, benzoinmethylether, benzoinisopropylether, diphenyl(2,4,6-trimethylbenzoyl)phosphine oxide, bis(2,4,6-trimethylbenzoyl)-phenylphosphine oxide, benzyl, methylphenyl glyoxy ester, benzophenone, methyl o-benzoylbenzoate-4-phenylbenzophenone, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, 3,3'-dimethyl-4-methoxybenzophenone, 2-isopropylthioxanthone, 2,4-dimethylthioxanthone, 2,4-diethylthioxanthone, 2,4-dichlorothioxanthone, Michler-ketone, 4,4'-diethylaminobenzophenone, 10-butyl-2-chloroacridone, 2-ethylanthraquinone, 9,10-phenanthrenequinone, camphorquinone, and 2,4-diethyloxanthen-9-one.

The radical polymerization initiator is preferably contained in an amount of 0.01 to 10 mass%, more preferably contained in an amount of 0.1 to 5 mass%, even more preferably in an amount of 0.5 to 3 mass% based on the total amount of the radical polymerizable compound. When the radical polymerization initiator is contained in an amount within the range, it is possible to sufficiently efficiently polymerize the radical polymerizable compound mentioned above.

Meanwhile, the cationic polymerization initiator is not particularly limited as long as being a compound capable of generating an acid by irradiation with an active energy ray to enable a cationic polymerizable compound to be polymerized, and a known photoacid generating agent can be used. Examples of the photoacid generating agent include onium salt-based photoacid generating agents such as sulfonium salt-based or iodonium salt-based photoacid generating agents.

Examples of an anionic component in the onium salt-based photoacid generating agents include phosphate ions such as PF₆⁻ and PF₄(CF₂CF₃)₂⁻, antimonate ions such as SbF₆⁻, fluoroalkyl sulphonate ions such as trifluoromethane sulfonate, perfluoroalkyl sulfonamide, and perfluoroalkyl sulfonmethide.

Meanwhile, examples of the cationic component in the onium salt-based photoacid generating agents include sulfoniums such as aromatic sulfonium, iodoniums such as aromatic iodonium, phosphoniums such as aromatic phosphonium, and sulfoxoniums such as aromatic sulfoxonium.

Examples of such an onium salt-based photoacid generating agent include sulfonium salts such as aromatic sulfonium salts, iodonium salts such as aromatic iodonium salts, phosphonium salts such as aromatic phosphonium salts, and sulfoxonium salts such as aromatic sulfoxonium salts, which contain an anionic component as a counter anion.

The photoacid generating agent is preferably contained in an amount of 0.01 to 10 mass%, more preferably contained in an amount of 0.1 to 5 mass%, even more preferably 0.5 to 3 mass% based on the total amount of the cationic polymerizable compound. When the photoacid generating agent is contained in an amount within the range, it is possible to sufficiently efficiently polymerize the cationic polymerizable compound mentioned above.

### 1-4. Other Compounds

The resin composition may contain, for example, a thermally polymerizable resin, a thickener, and various additives.

Examples of the thermally polymerizable resin include cyanate ester-based resins, epoxy resins, and silicone resins. Examples of the cyanate ester resin as the thermally polymerizable resin include 1,3- or 1,4-dicyanatobenzene; 1,3,5-tricyanatobenzene; 1,3-, 1,4-, 1,6-, 1,8-, 2,6-, or 2,7-dicyanatonaphthalene; 1,3,6-tricyanatonaphthalene; 2,2'- or 4,4'-dicyanatobiphenyl; bis(4-cyanatophenyl)methane; 2,2-bis(4-cyanatophenyl)propane; 2,2-bis(3,5-dichloro-4-cyanatophenyl)propane; 2,2-bis(3-dibromo-4-dicyanatophenyl)propane; bis(4-cyanatophenyl)ether; bis(4-cyanatophenyl)thioether; bis(4-cyanatophenyl)sulfone; tris(4-cyanatophenyl)phosphite; tris(4-cyanatophenyl)phosphate; bis(3-chloro-4-cyanatophenyl)methane; 4-cyanatobiphenyl; 4-cumylcyanatobenzene; 2-t-butyl-1,4-dicyanatobenzene; 2,4-dimethyl-1,3-dicyanatobenzene; 2,5-di-t-butyl-1,4-dicyanatobenzene; tetramethyl-1,4-dicyanatobenzene; 4-chloro-1,3-dicyanatobenzene; 3,3',5,5'-tetramethyl-4,4'dicyanatodiphenylbis(3-chloro-4-cyanatophenyl)methane;
1,1,1-tris(4-cyanatophenyl)ethane; 1,1-bis(4-cyanatophenyl)ethane; 2,2-bis(3,5-dichloro-4-cyanatophenyl)propane; 2,2-bis(3,5-dibromo-4-cyanatophenyl)propane; bis(p-cyanophenoxyphenoxy)benzene; di(4-cyanatophenyl)ketone; cyanated novolac; and cyanated bisphenol polycarbonate oligomers.

The epoxy-based resin as the thermally polymerizable resin contains a known epoxy resin having one or more epoxy group in the molecule. Examples thereof include crystalline epoxy resins such as biphenyl-type epoxy resins, bisphenol A-type epoxy resins, bisphenol F-type epoxy resins, stilbene-type epoxy resins, and hydroquinone-type epoxy resins; novolac-type epoxy resins such as cresol novolac-type epoxy resins, phenol novolac-type epoxy resins, and naphthol novolac-type epoxy resins; phenol aralkyl-type epoxy resins such as phenylene skeleton-containing phenol aralkyl-type epoxy resins, biphenylene skeleton-containing phenol aralkyl-type epoxy resins, and phenylene skeleton-containing naphthol aralkyl-type epoxy resins; polyfunctional-type epoxy resins such as triphenolmethane-type epoxy resins, alkyl-modified triphenolmethane-type epoxy resins, glycidylamine, and tetrafunctional naphthalene-type epoxy resins; modified phenol-type epoxy resins such as dicyclopentadiene-modified phenol type-epoxy resins, terpene-modified phenol-type epoxy resins, and silicone-modified epoxy resins; heterocyclic ring-containing epoxy resins such as triazine nucleus-containing epoxy resins; and naphthylene ether-type epoxy.

The silicone resin as the thermally polymerizable resin is only required to be a resin having an organopolysilixane structure, and examples thereof include addition curable-type silicone resins as follows.

A typical addition curable-type liquid silicone resin contains a silicone containing a vinylsilyl group, a silicone containing a hydrosilyl group, and an addition reaction catalyst as essential components. When the silicone resin is heated, an addition reaction occurring between the vinylsilyl group and the hydrosilyl group forms a crosslinked structure to thereby cure the resin.

Examples of the silicones having a vinyl group include polydimethylsiloxanes having vinyl group-substitution at each terminal silicon atom, dimethylsiloxane-diphenylsiloxane copolymers having vinyl group-substitution at each terminal silicon atom, polyphenylmethylsiloxane having vinyl group-substitution at each terminal silicon atom, and vinylmethylsiloxane-dimethylsiloxane copolymers having a trimethylsilyl group at each terminal.

Examples of the silicone having a hydrosilyl group include methylhydrosiloxane-dimethylsiloxane copolymers having a trimethylsilyl group at each terminal. It is possible to use polydimethylsiloxane having a hydrogen atom bonded to each terminal in combination.

Examples of the addition reaction catalyst mainly used include platinum group metal catalysts including platinum-based catalysts such as platinum black, platinum(IV) chloride, chloroplatinic acid, a reaction product of chloroplatinic acid and a monohydric alcohol, a complex of chloroplatinic acid and an olefin, and platinum bis acetoacetate, palladium-based catalysts, and rhodium-based catalysts.

The thermally polymerizable resin is preferably contained in an amount of 10 to 90 mass%, more preferably of 30 to 70 mass%, even more preferably 40 to 60 mass% based on the total amount of the resin composition. When the thermally polymerizable resin is contained in an amount within the range, the heat resistance and the like of a three-dimensional shaped object to be obtained are more likely to increase.

The resin composition may contain a curing agent, a curing accelerator, and the like together with the thermally polymerizable resin. Examples of the curing agent and the curing accelerator include aminos including linear aliphatic diamines having 2 to 20 carbon atoms such as ethylenediamine, trimethylenediamine, tetramethylenediamine, and hexamethylenediamine, metaphenylenediamine, paraphenylenediamine, paraxylenediamine, 4,4'-diaminodiphenylmethane, 4,4'-diaminodiphenylpropane, 4,4'-diaminodiphenylether, 4,4'-diaminodiphenylsulfone, 4,4'-diaminodicyclohexane, bis(4-aminophenyl)phenylmethane, 1,5-diaminonaphthalene, metaxylenediamine, paraxylenediamine, 1,1-bis(4-aminophenyl)cyclohexane, N,N-dimethyl-n-octyl amine, and dicyanoamide; resol-type phenol resins such as aniline modified resol resins and dimethyl ether resol resins; novolac-type phenol resins such as phenol novolac resins, cresol novolac resins, tert-butylphenol novolac resins, and nonylphenol novolac resins; phenol aralkyl resins such as phenylene skeleton-containing phenol aralkyl resins and biphenylene skeleton-containing phenol aralkyl resins; phenol resins having a fused polycyclic structure such as a naphthalene skeleton and an anthracene skeleton; polyoxystyrenes such as polyparaoxystyrene; acid anhydrides including alicyclic acid anhydrides such as hexahydrophthalic anhydride (HHPA) and methyltetrahydrophthalic anhydride (MTHPA) and aromatic acid anhydrides such as trimellitic anhydride (TMA), pyromellitic anhydride (PMDA), and benzophenone tetracarboxylic acid (BTDA); polymercaptan compounds such as polysulfides, thioesters, and thioethers; isocyanate compounds such as isocyanate prepolymers and blocked isocyanates; organic acids such as carboxylic acid-containing polyester resins; and organic metal salts such as zinc naphthenate, cobalt naphthenate, tin octylate, cobalt octylate, cobalt(II) bis acetylacetonate, cobalt(III) tris acetylacetonate, and zinc acetylacetonate. The resin composition may contain one of the curing agents and the curing accelerators or may contain two or more of these. The amount of the curing agent or the curing accelerator is appropriately selected in accordance with the type and the amount of the thermally polymerizable resin.

The resin composition may contain a thickener in a range where the objects and effects of the present invention are not impaired. Examples of the thickener include clay minerals, cellulose nanofibers, and cellulose nanocrystals.

Specific examples of the clay mineral include talc, mica, clay, wollastonite, hectorite, saponite, stevensite, beidellite, montmorillonite, nontronite, bentonite, swellable micas such as Na-type tetrasilisic fluorine mica, Li-type tetrasilisic fluorine mica, Na-type fluorine taeniolite, and Li-type fluorine taeniolite, and vermiculite.

The cellulose nanofibers can be fibers mainly based on fibrous nanofibrils obtained by mechanical defibration of plant-derived fibers or plant cell wall, biosynthesis by acetic acid bacteria, oxidation of 2,2,6,6-tetramethylpiperidine-1-oxyl radical (TEMPO) or the like by a N-oxyl compound, an electrospinning method, or the like. The cellulose nanocrystals can be crystals mainly based on nanofibrils crystallized in a whisker-like shape (needle-like shape) obtained by mechanically defibrating plant-derived fibers or plant cell wall followed by an acid treatment or the like. The cellulose nanofibers and cellulose nanocrystals are only required to be mainly based on cellulose and may contain lignin, hemicellulose, and the like.

The resin composition may contain one thickener or may contain two or more thickeners. When the resin composition contains these thickeners, the viscosity of the resin composition moderately increases, and sedimentation and aggregation of the metal-containing particles are more likely to be suppressed. However, when the amount of the thickener is excessively large, the air that has entered into the resin composition may be more unlikely to escape. Thus, the amount of the thickener is preferably 0.1 to 10 mass%, more preferably 0.5 to 5 mass%, even more preferably, 1 to 3 mass% based on the total mass of the resin composition.

The resin composition may further contain any additives such as a photosensitizer, a polymerization inhibitor, an ultraviolet absorber, an antioxidant, colorants such as dyes and pigments, an antifoaming agent, and a surfactant as long as the formation of a three-dimensional shaped object by irradiation with an active energy ray is enabled and no uniformity is markedly caused in a three-dimensional shaped object to be obtained.

### 1-5. Physical Properties of Resin Composition

The resin composition used in the present invention has a viscosity at 25°C, measured with a rotary viscometer by a method according to JIS K-7117-1, of preferably 0.2 to 100 Pa·s, more preferably 1 to 15 Pa·s. When the viscosity of the resin composition is within the range, the metal-containing particles are more unlikely to sediment or aggregate, and thus the strength of a three-dimensional shaped object is more likely to increase.

### 1-6. Method for Preparing Resin Composition

A method for preparing the above resin composition is not particularly limited. The resin composition may be prepared by mixing the photocurable compound mentioned above, metal-containing particles, a polymerization initiator, and additionally other components as required at once or may be prepared by mixing some components in advance and then adding the other components thereto, for example.

As the apparatus for use in mixing of the resin composition, known apparatuses can be used. Examples thereof include media-less stirrers such as ULTRA-TURRAX (manufactured by IKA Co., Ltd.), TK Homomixer (manufactured by Primix Corporation), TK Pipeline Homomixer (manufactured by Primix Corporation), TK Fill Mix (manufactured by Primix Corporation), Cleamix (manufactured by M Technique Co., Ltd.), Clea SS5 (manufactured by M Technique Co., Ltd.), Cavitron (manufactured by Eurotech Co., Ltd.), and Fine Flow Mill (manufactured by Pacific Machinery & Engineering Co., Ltd.), media stirrers such as Visco mill (manufactured by Aimex Co., Ltd.), Apex Mill (manufactured by Kotobuki Industries Co., Ltd.), Star Mill (manufactured by Ashizawa Fine Tech Ltd.), DCP Super Flow (manufactured by Nippon Eirich Co., Ltd.), MP Mill (manufactured by INOUE MFG., INC.), Spike Mill (manufactured by INOUE MFG., INC.), Mighty Mill (manufactured by INOUE MFG., INC.), and SC Mill (manufactured by MitsuiMining Co., Ltd.), and high pressure impact-type dispersers such as Ultimizer (manufactured by Sugino Machine Limited), Star Burst (manufactured by Sugino Machine Limited), Nanomizer (manufactured by YOSHIDA KIKAI CO., LTD.), and NANO3000 (manufactured by Beryu Corporation).

Planetary centrifugal mixers such as Awatori Rentaro (manufactured by THINKY CORPORATION) and Kakuhunter (manufactured by SHASHIN KAGAKU CO., LTD.), planetary type mixers such as HIVIS MIX (manufactured by Primix Corporation) and HIVIS DISPER (manufactured by Primix Corporation), and ultrasonic disperser such as Nanoruptor (manufactured by SonicBio Co., LTD.) can also be suitably used.

### 2. Method for Producing Three-dimensional Shaped Object

The liquid resin composition mentioned above can be used for a method for producing a three-dimensional shaped object including selective irradiation with an active energy ray to produce a primary cured product including a cured product of the photocurable compound.

In the method for producing a three-dimensional shaped object in which the resin composition mentioned above is used, first, the resin composition is selectively irradiated with an active energy ray to cure the photocurable compound into a desired shape to thereby form a primary cured product. The active energy ray is not particularly limited as long as the ray can sufficiently cure the photocurable compound, and examples thereof can include ultraviolet rays, X-rays, electron rays, γ-rays, and visible light rays. When the resin composition contains only the photocurable compound as the polymerizable component, the primary cured product can be a three-dimensional shaped object. In contrast, when the resin composition contains a component other than the photocurable compound (for example, a thermally polymerizable resin) as a polymerizable component, after the primary cured product is formed, the thermally polymerizable compound and the like contained in the primary cured product are cured (polymerized) by an optional method to give a three-dimensional shaped object.

Examples of the method for producing a three-dimensional shaped object in which the resin composition mentioned above is used include the following two methods.

### 2-1. Laminate Shaping Method (SLA Method)

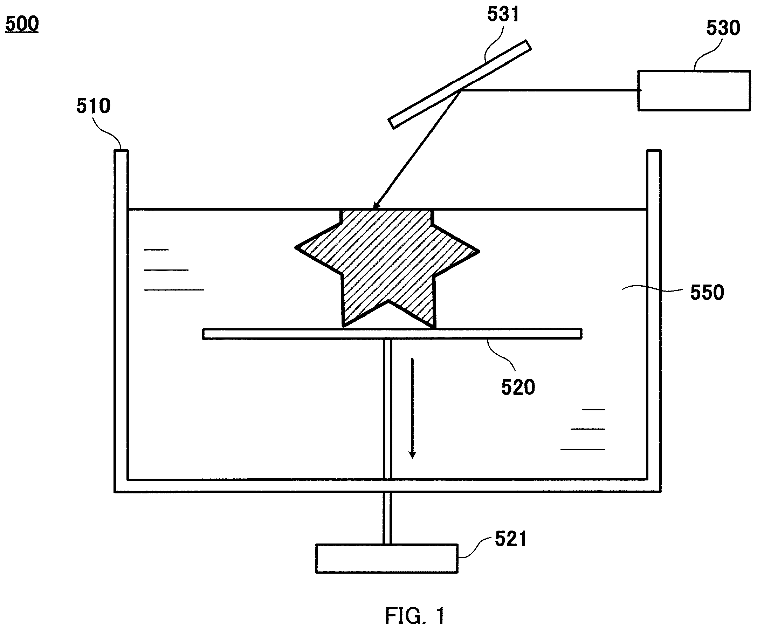

FIG. 1 schematically illustrates one example of an apparatus for producing a primary cured product by the laminate shaping method (apparatus for producing a three-dimensional shaped object). Production apparatus 500 includes shaping tank 510 that can store liquid resin composition 550, shaping stage 520 that can reciprocate in the vertical direction (depth direction) in shaping tank 510, base 521 that supports shaping stage 520, light source 530 of an active energy ray, galvano mirror 531 that guides the active energy ray into shaping tank 510, and the like.

Shaping tank 510 is only required to have a size that can accommodate a primary cured product to be produced. As light source 530 for active energy ray irradiation, known ones can be used. Examples of light source 530 for ultraviolet ray irradiation include semiconductor laser, metal halide lamps, mercury arc lamps, xenon arc lamps, fluorescent lamps, carbon arc lamps, tungsten-halogen copier lamps, and sunlight.

In the method, first, shaping tank 510 is filled with resin composition 550. Also at this time, shaping stage 520 is disposed lower than the liquid surface of resin composition 550 by a thickness corresponding to the thickness of a shaped object layer (first shaped object layer) to be produced. In this state, scanning is performed by guiding an active energy ray emitted from light source 530 with galvano mirror 531 or the like to irradiate resin composition 550 on shaping stage 520 with the active energy ray. At this time, the first shaped object layer is formed into a desired shape by selectively irradiating only a region to form the first shaped object layer with the active energy ray.

Thereafter, shaping stage 520 is lowered by a thickness corresponding to the thickness of one layer (the thickness of a second shaped object layer to be produced next) (moved in the depth direction) to submerge the first shaped object layer into resin composition 550. This provides the resin composition onto the first shaped object layer. Subsequently, in the same manner as described above, an active energy ray emitted from light source 530 is guided by galvano mirror 531 or the like to irradiate resin composition 550 positioned above the first shaped object layer with the active energy ray. Also at this time, only a region to form the second shaped object layer is selectively irradiated with the active energy ray. This allows the second shaped object layer to be laminated on the first shaped object layer.

Thereafter, lowering of shaping stage 520 (supply of the resin composition) and irradiation with an active energy ray are repeated to form a primary cured product in a desired shape. The shape of the primary cured product produced by the above method is the same as the shape of a three-dimensional shaped object finally produced.

Thereafter, a polymerizable compound other than the photocurable compound contained in the primary cured product is cured by various methods as required to thereby give a three-dimensional shaped object. A method for curing the second polymerizable compound is appropriately selected depending on the type of the second polymerizable compound (polymerization mode). The method may be, for example, a method including heating of the primary cured product or a method including irradiation with a microwave or actinic radiation. The method also may be a method in which the primary cured product is immersed in water, an acid, a base, or the like to react the product therewith.

Among those described above, the method including heating of the primary cured product is preferable. When the primary cured product is heated, the temperature is preferably set to a temperature at which the primary cured product is not deformed, for example, preferably set to a temperature lower than Tg of a cured product of the photocurable compound.

### 2-2. Continuous Shaping Method (CLIP method)

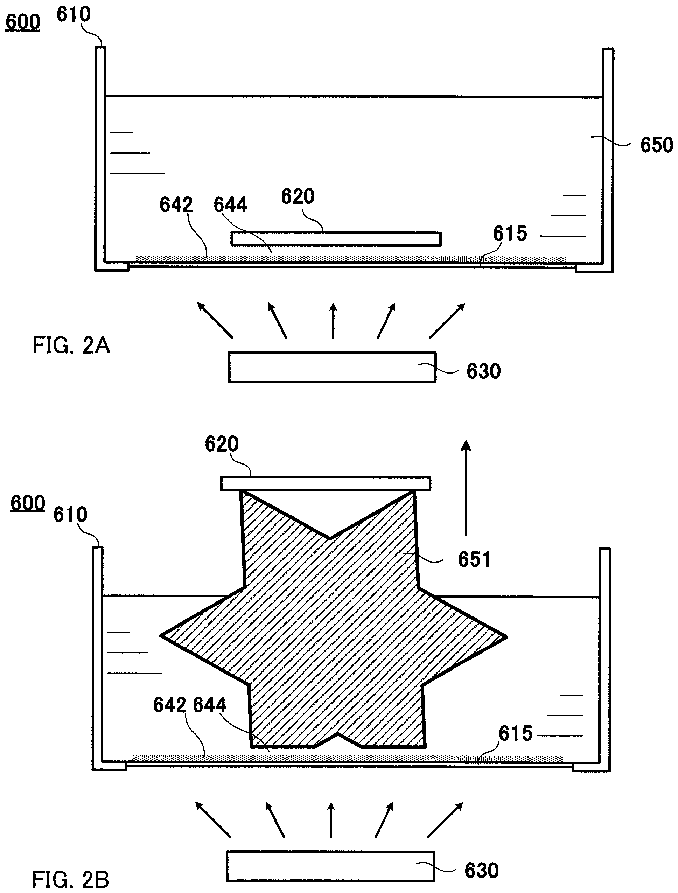

FIG. 2A and FIG. 2B schematically illustrate one example of an apparatus that produces a primary cured product by a continuous shaping method (apparatus for producing a three-dimensional shaped object). As shown in FIG. 2A, production apparatus 600 includes shaping tank 610 that can store a liquid resin composition, stage 620 that can reciprocate in the vertical direction (depth direction), light source 630 for irradiation with an active energy ray, and the like. Shaping tank 610 has window part 615 at its bottom part, which does not allow the resin composition to pass therethrough but allows actinic radiation and a polymerization inhibitor (oxygen in the present embodiment) to pass therethrough. The material and the like of shaping tank 610 is not particularly limited as long as shaping tank 610 has a width larger than that of a three-dimensional shaped object to be produced and does not interact with the resin composition. The material of window part 615 is also not particularly limited as long as the objects and effects of the present invention are not impaired.

As light source 630 for irradiation with an active energy ray, known ones can be used. Examples of light source 630 for ultraviolet ray irradiation include semiconductor laser, metal halide lamps, mercury arc lamps, xenon arc lamps, fluorescent lamps, carbon arc lamps, tungsten-halogen copier lamps, and sunlight. It is possible to surface-irradiate a desired region with an active energy ray by using a spatial light modulator (SLM) projection light system having an SLM such as a crystal liquid panel or a digital mirror device (DMD) as light source 630.

In the method, first, shaping tank 610 is filled with resin composition 650 mentioned above. As mentioned above, the photocurable compound contained in resin composition 650 to be used in the method is a radical polymerizable compound. Then, oxygen is introduced from window part 615 provided in the bottom part of shaping tank 610 to the bottom part side of shaping tank 610. The method for introducing oxygen is not particularly limited and can be, for example, a method in which the outside of shaping tank 610 is set to have an atmosphere having a high concentration of oxygen, and a pressure is applied to the atmosphere, or the like.

Supplying oxygen from window part 615 into shaping tank 610 in this way leads to an increase in the oxygen concentration in a region on the side of window part 615, and buffer region 642 is formed, in which the photocurable compound is not cured even when irradiated with an active energy ray. In contrast, in the region above buffer region 642, the oxygen concentration becomes sufficiently lower than that of buffer region 642, and the region will be region for curing 644, in which photocurable compound can be cured by irradiation with an active energy ray.

Subsequently, performed is selectively irradiating region for curing 644 with an active energy ray from the side of buffer region 642 to form a cured product of the photocurable compound in region for curing 644. Specifically, as shown in FIG. 2A, stage 620 to be the base point for production of the primary cured product is disposed in proximity to the interface between region for curing 644 and buffer region 642. Then, the bottom surface side of stage 620 is selectively irradiated with an active energy ray from light source 630 disposed on the side of buffer region 642. This causes curing of the photocurable compound in the resin composition in proximity to the bottom surface of stage 620 (region for curing 644) to thereby form the top part of the primary cured product.

Thereafter, as shown in FIG. 2B, stage 620 is elevated (moved in the direction away from buffer region 642). This causes uncured resin composition 650 to be freshly supplied from cured product 651 to region for curing 644 on the bottom part side of shaping tank 610. Then, an active energy ray from light source 630 is irradiated continuously and selectively (to a region to be cured) while stage 620 and cured product 651 are continuously elevated. This allows the cured product to be continuously formed from the bottom surface of stage 620 to the bottom part side of shaping tank 610 to thereby produce a primary shaped object having no seam and having a high strength. Also in the present embodiment, the shape of the primary cured product is the same as the shape of a three-dimensional shaped object to be finally produced.

Thereafter, a polymerizable compound other than the photocurable compound contained in the primary cured product is cured by various methods as required to thereby give a three-dimensional shaped object. The method for curing the second polymerizable compound is appropriately selected depending on the type of the second polymerizable compound (polymerization mode) and the like, and may be the same as the method for curing the second polymerizable compound in the laminate shaping method (SLA method).

In the above explanation, the example in which oxygen is used as the polymerization inhibitor has been described, but the method is not limited thereto and the polymerization inhibitor may be a known polymerization suppressor or the like for inhibiting polymerization of the photocurable compound. When the polymerization inhibitor is a known polymerization suppressor, a storage tank that stores the polymerization suppressor is provided at a position outside shaping tank 610 and in contact with window part 615, and the polymerization inhibitor may be supplied from the storage tank to the bottom part side of the shaping tank by allowing the polymerization inhibitor to pass through window part 615.

### 3. Industrial Robot

A three-dimensional shaped object to be obtained from the resin composition mentioned above has high dimensional accuracy and a tensile strength and additionally has detectability by a metal detector. Thus, an exemplary application of the three-dimensional shaped object is an object-gripping attachment that can be detachably attached to the distal end of an industrial robot (hereinafter simply referred to as an "attachment"). The attachment is a part that performs works such as gripping and moving a product, intermediate, raw material, or the like and gripping and reorienting a product, intermediate, raw material, or the like, for example.

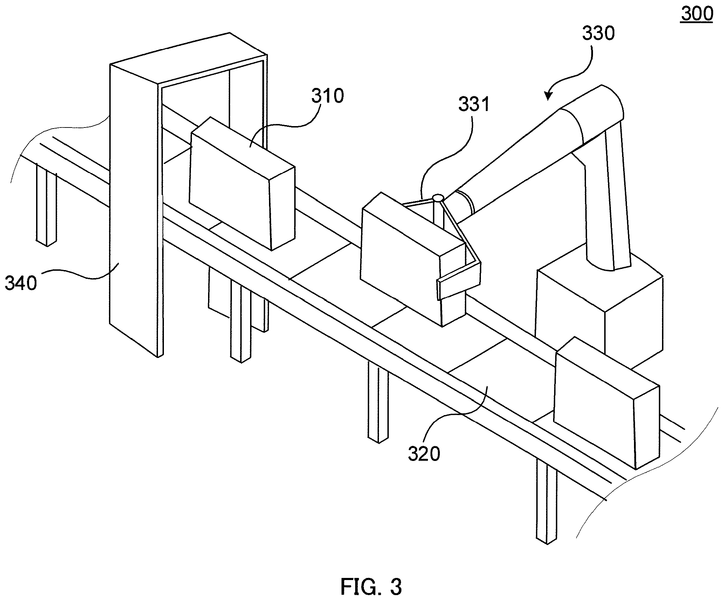

A part of an industrial robot to which such an attachment is applicable is schematically illustrated in FIG. 3. Industrial robot 300 includes conveying section 320 that conveys object 310, arm section 330 that operates object 310 conveyed by conveying section 320, and metal detecting section 340 that inspects whether object 310 operated by arm section 330 contains a metal compound or not. Attachment 331 is attached to the distal end of arm section 330.

The type of object 310 to be subjected to various operations by industrial robot 300 is not particularly limited as long as object 310 is one not detected by the metal detecting section, such as food or the like or a resin product or the like.

Meanwhile, conveying section 320 in industrial robot 300 is not particularly limited as long as conveying section 320 is a section that can continuously or intermittently move object 310, and can be the same as the conveying section of a common industrial robot, for example.

Arm section 330, to which attachment 331 for gripping object 310 is detachably attached, is a section that performs predetermined operations (for example, processing, movement, selection, and the like of object 310) on object 310. In arm section 310, attachment 331 performs a predetermined operation thereon while gripping object 310. In proximity to arm section 330, there may be further disposed an arm section for operations (not shown) and the like that perform operations (for example, processing of object 310 and the like) different from those of arm section 330. The shape of attachment 331 is not particularly limited and appropriately selected in accordance with the shape of object 310.

Metal detecting section 340 is a section that determines whether a metal component is contained in object 310 operated by arm section 330 or not. When a metal component is detected in metal detecting section 340, a section that moves the object 310, marks the object 310, or the like (not shown) may be provided on the downstream side of metal detecting section 340.

Metal detecting section 340 is only required to be able to detect a metal component, and may be an alternate current-type metal detecting section (hereinbelow, also referred to as an "alternate current-type MD") or may be a direct current-type metal detecting section (hereinafter, also referred to as a "direct current-type MD").

When metal detecting section 340 is an alternate current-type MD, any and all metals can be detected. The alternate current-type MD, in the case of detecting a ferromagnetic material such as iron, nickel, or cobalt, detects a change in magnetic lines due to a metal to determine whether a metal component is present or not. Meanwhile, in the case of detecting a nonmagnetic material such as stainless steel, aluminum, or copper, the alternate current-type MD generates an eddy current in proximity to a metal component by an alternate current magnetic field to thereby generate a magnetic field. Then, the MD detects a change in this magnetic field to determine whether a metal component is present or not.

Meanwhile, when metal detecting section 340 is a direct current-type MD, inspection on food for which aluminum foil and the like is used can be performed. In the direct current-type MD, a ferromagnetic material included in metal detecting section 340 magnetizes a metal component to thereby generate an electromotive force (voltage). The MD detects the electromotive force to determine whether the metal component is present or not.

Industrial robot 300 mentioned above performs various operations while gripping object 310 by attachment 331 of arm section 330. At this time, it is anticipated that a part of attachment 331 may be broken or the like and a fragment thereof may be mixed into object 310. In preparation for such a case, production of attachment 311 using the resin composition containing metal-containing particles mentioned above enables products including a mixed fragment to be eliminated and the like.

In industrial robot 300 like this, the minimum volume for detection of a specimen by metal detecting section 340 is preferably less than 40 mm³, more preferably less than 32 mm³, even more preferably less than 24 mm³. If such a small specimen can be detected, it is possible to produce more reliable products. An improvement in the detectability can be achieved by enhancing the dispersibility of the metal-containing particles in the resin composition mentioned above.

### Examples

Hereinbelow, specific examples of the present invention will be described.

The following metal-containing particles were used in Examples and Comparative Examples.
(Metal-containing particles)
Stainless steel particles A (average particle size: 0.02 µm)
Stainless steel particles B (average particle size: 0.1 µm)
Stainless steel particles C (average particle size: 3 µm)
Stainless steel particles D (average particle size: 0.05 µm)
Stainless steel particles E (average particle size: 1 µm)
Iron oxide particles (average particle size: 0.1 µm)
Iron particles (average particle size: 0.1 µm)

### 1. Preparation of Resin Composition

### [Sample 1]

To 20 g of an ethanol aqueous solution, 30 g of stainless steel particles A having an average particle size of 0.02 µm, 0.3 g of n-propyltrimethoxysilane (manufactured by Shin-Etsu Silicone, KBM-3033) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (manufactured by DAICEL-ALLNEX LTD., EBECRYL 600; bisphenol A-type epoxy acrylate), 21 g of n-propyltrimethoxysilane-modified stainless steel particles, and 2.5 g of a photopolymerization initiator (IRGACURE TPO: diphenyl(2,4,6-trimethylbenzoyl)phosphine oxide) were mixed to prepare a resin composition.

### [Sample 2]

n-Propyltrimethoxysilane-modified stainless steel particles were produced in the same manner as for Sample 1. Thereafter, 140 g of a photocurable resin (EBECRYL 600), 62 g of n-propyltrimethoxysilane-modified stainless steel particles, and 2.5 g of a photopolymerization initiator (IRGACURE TPO) were mixed to prepare a resin composition.

### [Sample 3]

n-Propyltrimethoxysilane-modified stainless steel particles were produced in the same manner as for Sample 1. Thereafter, 100 g of a photocurable resin (EBECRYL 600), 103 g of n-propyltrimethoxysilane-modified stainless steel particles, and 2.5 g of a photopolymerization initiator (IRGACURE TPO) were mixed to prepare a resin composition.

### [Sample 4]

To 20 g of an ethanol aqueous solution, 30 g of stainless steel particles B having an average particle size of 0.1 µm, 0.3 g of n-propyltrimethoxysilane (manufactured by Shin-Etsu Silicone, KBM-3033) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of n-propyltrimethoxysilane-modified stainless steel particles, and 2.5 g of a photopolymerization initiator (IRGACURE TPO) were mixed to prepare a resin composition.

### [Sample 5]

n-Propyltrimethoxysilane-modified stainless steel particles were produced in the same manner as for Sample 4. Thereafter, 140 g of a photocurable resin (EBECRYL 600), 62 g of n-propyltrimethoxysilane-modified stainless steel particles, and 2.5 g of a photopolymerization initiator (IRGACURE TPO) were mixed to prepare a resin composition.

### [Sample 6]

n-Propyltrimethoxysilane-modified stainless steel particles were produced in the same manner as for Sample 4. Thereafter, 100 g of a photocurable resin (EBECRYL 600), 103 g of n-propyltrimethoxysilane-modified stainless steel particles, and 2.5 g of a photopolymerization initiator (IRGACURE TPO) were mixed to prepare a resin composition.

### [Sample 7]

To 20 g of an ethanol aqueous solution, 30 g of stainless steel particles C having an average particle size of 3 µm, 0.3 g of n-propyltrimethoxysilane (manufactured by Shin-Etsu Silicone, KBM-3033) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of n-propyltrimethoxysilane-modified stainless steel particles, and 2.5 g of a photopolymerization initiator (IRGACURE TPO) were mixed to prepare a resin composition.

### [Sample 8]

n-Propyltrimethoxysilane-modified stainless steel particles were produced in the same manner as for Sample 7. Thereafter, 140 g of a photocurable resin (EBECRYL 600), 62 g of n-propyltrimethoxysilane-modified stainless steel particles, and 2.5 g of a photopolymerization initiator (IRGACURE TPO) were mixed to prepare a resin composition.

### [Sample 9]

n-Propyltrimethoxysilane-modified stainless steel particles were produced in the same manner as for Sample 7. Thereafter, 100 g of a photocurable resin (EBECRYL 600), 103 g of n-propyltrimethoxysilane-modified stainless steel particles, and 2.5 g of a photopolymerization initiator (IRGACURE TPO) were mixed to prepare a resin composition.

### [Sample 10]

To 20 g of an ethanol aqueous solution, 30 g of stainless steel particles A having an average particle size of 0.02 µm, 0.3 g of 3-acryloxypropyltrimethoxysilane (manufactured by Shin-Etsu Silicone, KBM-5103) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of 3-acryloxypropyltrimethoxysilane-modified stainless steel particles, and 2.5 g of a photopolymerization initiator (IRGACURE TPO) were mixed to prepare a resin composition.

### [Sample 11]

3-Acryloxypropyltrimethoxysilane-modified stainless steel particles were produced in the same manner as for Sample 10. Thereafter, 140 g of a photocurable resin (EBECRYL 600), 62 g of the n-propyltrimethoxysilane-modified stainless steel particles, and 2.5 g of a photopolymerization initiator (IRGACURE TPO) were mixed to prepare a resin composition.

### [Sample 12]

3-Acryloxypropyltrimethoxysilane-modified stainless steel particles were produced in the same manner as for Sample 10. Thereafter, 100 g of a photocurable resin (EBECRYL 600), 103 g of n-propyltrimethoxysilane-modified stainless steel particles, and 2.5 g of a photopolymerization initiator (IRGACURE TPO) were mixed to prepare a resin composition.

### [Sample 13]

To 20 g of an ethanol aqueous solution, 30 g of stainless steel particles B having an average particle size of 0.1 µm, 0.3 g of 3-acryloxypropyltrimethoxysilane (manufactured by Shin-Etsu Silicone, KBM-5103) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of 3-acryloxypropyltrimethoxysilane-modified stainless steel particles, and 2.5 g of a photopolymerization initiator (IRGACURE TPO) were mixed to prepare a resin composition.

### [Sample 14]

3-Acryloxypropyltrimethoxysilane-modified stainless steel particles were produced in the same manner as for Sample 13. Thereafter, 140 g of a photocurable resin (EBECRYL 600), 62 g of 3-acryloxypropyltrimethoxysilane-modified stainless steel particles, and 2.5 g of a photopolymerization initiator (IRGACURE TPO) were mixed to prepare a resin composition.

### [Sample 15]

3-Acryloxypropyltrimethoxysilane-modified stainless steel particles were produced in the same manner as for Sample 13. Thereafter, 100 g of a photocurable resin (EBECRYL 600), 103 g of 3-acryloxypropyltrimethoxysilane-modified stainless steel particles, and 2.5 g of a photopolymerization initiator (IRGACURE TPO) were mixed to prepare a resin composition.

### [Sample 16]

To 20 g of an ethanol aqueous solution, 30 g of stainless steel particles C having an average particle size of 3 µm, 0.3 g of 3-acryloxypropyltrimethoxysilane (manufactured by Shin-Etsu Silicone, KBM-5103) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill. Thereafter, 180 g of a photocurable resin (EBECRYL 600), 21 g of 3-acryloxypropyltrimethoxysilane-modified stainless steel particles, and 2.5 g of a photopolymerization initiator (IRGACURE TPO) were mixed to prepare a resin composition.

### [Sample 17]

3-Acryloxypropyltrimethoxysilane-modified stainless steel particles were produced in the same manner as for Sample 16. Thereafter, 140 g of a photocurable resin (EBECRYL 600), 62 g of 3-acryloxypropyltrimethoxysilane-modified stainless steel particles, and 2.5 g of a photopolymerization initiator (IRGACURE TPO) were mixed to prepare a resin composition.

### [Sample 18]

3-Acryloxypropyltrimethoxysilane-modified stainless steel particles were produced in the same manner as for Sample 16. Thereafter, 100 g of a photocurable resin (EBECRYL 600), 103 g of 3-acryloxypropyltrimethoxysilane-modified stainless steel particles, and 2.5 g of a photopolymerization initiator (IRGACURE TPO) were mixed to prepare a resin composition.

### [Sample 19]

3-Acryloxypropyltrimethoxysilane-modified stainless steel particles were produced in the same manner as for Sample 10. Thereafter, 180 g of a photocurable resin (EBECRYL 600), 21 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 20]

3-Acryloxypropyltrimethoxysilane-modified stainless steel particles were produced in the same manner as for Sample 10. Thereafter, 140 g of a photocurable resin (EBECRYL 600), 62 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 21]

3-Acryloxypropyltrimethoxysilane-modified stainless steel particles were produced in the same manner as for Sample 10. Thereafter, 100 g of a photocurable resin (EBECRYL 600), 103 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 22]

To 20 g of an ethanol aqueous solution, 30 g of stainless steel particles D having an average particle size of 0.05 µm, 0.3 g of 3-acryloxypropyltrimethoxysilane (manufactured by Shin-Etsu Silicone, KBM-5103) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 23]

3-Acryloxypropyltrimethoxysilane-modified stainless steel particles were produced in the same manner as for Sample 22. Thereafter, 140 g of a photocurable resin (EBECRYL 600), 62 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 24]

3-Acryloxypropyltrimethoxysilane-modified stainless steel particles were produced in the same manner as for Sample 22. Thereafter, 100 g of a photocurable resin (EBECRYL 600), 103 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 25]

3-Acryloxypropyltrimethoxysilane-modified stainless steel particles were produced in the same manner as for Sample 13. Thereafter, 180 g of a photocurable resin (EBECRYL 600), 21 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 26]

3-Acryloxypropyltrimethoxysilane-modified stainless steel particles were produced in the same manner as for Sample 13. Thereafter, 140 g of a photocurable resin (EBECRYL 600), 62 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 27]

3-Acryloxypropyltrimethoxysilane-modified stainless steel particles were produced in the same manner as for Sample 13. Thereafter, 100 g of a photocurable resin (EBECRYL 600), 103 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 28]

To 20 g of an ethanol aqueous solution, 30 g of stainless steel particles E having an average particle size of 1 µm, 0.3 g of 3-acryloxypropyltrimethoxysilane (manufactured by Shin-Etsu Silicone, KBM-5103) as a surface modifier, and 0.5 g of hydrochloric acid (concentration: 35%) were added and the mixture was stirred at room temperature for 30 minutes. After stirring, the reaction solution was filtered, and the residue was spread on a shallow tray or the like and dried at 120°C for 90 minutes. After drying, the dried residue was crushed in a ball mill.

Thereafter, 180 g of a photocurable resin (EBECRYL 600), 21 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 29]

3-Acryloxypropyltrimethoxysilane-modified stainless steel particles were produced in the same manner as for Sample 28. Thereafter, 140 g of a photocurable resin (EBECRYL 600), 62 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 30]

3-Acryloxypropyltrimethoxysilane-modified stainless steel particles were produced in the same manner as for Sample 28. Thereafter, 100 g of a photocurable resin (EBECRYL 600), 103 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 31]

3-Acryloxypropyltrimethoxysilane-modified stainless steel particles were produced in the same manner as for Sample 16. Thereafter, 180 g of a photocurable resin (EBECRYL 600), 21 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 32]

3-Acryloxypropyltrimethoxysilane-modified stainless steel particles were produced in the same manner as for Sample 16. Thereafter, 140 g of a photocurable resin (EBECRYL 600), 62 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 33]

3-Acryloxypropyltrimethoxysilane-modified stainless steel particles were produced in the same manner as for Sample 16. Thereafter, 100 g of a photocurable resin (EBECRYL 600), 103 g of 3-acryloxypropyltrimethoxysilane-modified stainless steel particles, 10 g of a cellulose nanofiber solution (cellulose nanofiber concentration: 2%, fiber diameter: 50 nm, fiber length: 5 µm), and 2.5 g of a photopolymerization initiator (IRGACURE TPO) were mixed to prepare a resin composition.

### [Sample 34]

A resin composition was prepared in the same manner as for Sample 19 except that the stainless steel particles were replaced by iron oxide particles having an average particle size of 0.1 µm.

### [Sample 35]

A resin composition was prepared in the same manner as for Sample 20 except that the stainless steel particles were replaced by iron oxide particles having an average particle size of 0.1 µm.

### [Sample 36]

A resin composition was prepared in the same manner as for Sample 21 except that the stainless steel particles were replaced by iron oxide particles having an average particle size of 0.1 µm.

### [Sample 37]

A resin composition was prepared in the same manner as for Sample 19 except that the stainless steel particles were replaced by iron particles having an average particle size of 0.1 µm.

### [Sample 38]

A resin composition was prepared in the same manner as for Sample 20 except that the stainless steel particles were replaced by iron particles having an average particle size of 0.1 µm.

### [Sample 39]

A resin composition was prepared in the same manner as for Sample 21 except that the stainless steel particles were replaced by iron particles having an average particle size of 0.1 µm.

### [Sample 40]

3-Acryloxypropyltrimethoxysilane-modified iron oxide particles were produced in the same manner as for Sample 34. Thereafter, 90 g of a photocurable resin (EBECRYL 600), 90 g of a thermally polymerizable resin (manufactured by Nippon Steel & Sumikin Chemical Co., Ltd., YD-127; bisphenol A-type epoxy resin), 21 g of 3-acryloxypropyltrimethoxysilane-modified iron oxide particles, 10 g of a cellulose nanofiber solution (cellulose nanofiber concentration: 2%, fiber diameter: 50 nm, fiber length: 5 µm), 1.5 g of a photopolymerization initiator (IRGACURE TPO), and 1.5 g of a curing agent (4,4'-diaminodiphenylsulfone) were mixed to prepare a resin composition.

### [Sample 41]

3-Acryloxypropyltrimethoxysilane-modified iron oxide particles were produced in the same manner as for Sample 34. Thereafter, 70 g of a photocurable resin (EBECRYL 600), 70 g of a thermally polymerizable resin (YD-127), 62 g of 3-acryloxypropyltrimethoxysilane-modified iron oxide particles, 10 g of a cellulose nanofiber solution (cellulose nanofiber concentration: 2%, fiber diameter: 50 nm, fiber length: 5 µm), 1.5 g of a photopolymerization initiator (IRGACURE TPO), and 1.5 g of a curing agent (4,4'-diaminodiphenylsulfone) were mixed to prepare a resin composition.

### [Sample 42]

3-Acryloxypropyltrimethoxysilane-modified iron oxide particles were produced in the same manner as for Sample 34. Thereafter, 50 g of a photocurable resin (EBECRYL 600), 50 g of a thermally polymerizable resin (YD-127), 104 g of 3-acryloxypropyltrimethoxysilane-modified iron oxide particles, 10 g of a cellulose nanofiber solution (cellulose nanofiber concentration: 2%, fiber diameter: 50 nm, fiber length: 5 µm), 1.5 g of a photopolymerization initiator (IRGACURE TPO), and 1.5 g of a curing agent (4,4'-diaminodiphenylsulfone) to prepare a resin composition.

### [Sample 43]

Mixed were 190 g of a photocurable resin (EBECRYL 600), 11 g of stainless steel particles A, and 2.5 g of a photopolymerization initiator (IRGACURE TPO) to prepare a resin composition.

### [Sample 44]

Mixed were 180 g of a photocurable resin (EBECRYL 600), 21 g of stainless steel particles A, and 2.5 g of a photopolymerization initiator (IRGACURE TPO) to prepare a resin composition.

### [Sample 45]

Mixed were 140 g of a photocurable resin (EBECRYL 600), 62 g of stainless steel particles A, and 2.5 g of a photopolymerization initiator (IRGACURE TPO) to prepare a resin composition.

### [Sample 46]

Mixed were 100 g of a photocurable resin (EBECRYL 600), 103 g of stainless steel particles A, and 2.5 g of a photopolymerization initiator (IRGACURE TPO) to prepare a resin composition.

### [Sample 47]

Mixed were 80 g of a photocurable resin (EBECRYL 600), 125 g of stainless steel particles A, and 2.0 g of a photopolymerization initiator (IRGACURE TPO) to prepare a resin composition.

### [Sample 48]

A resin composition was prepared in the same manner as for Sample 43 except that stainless steel particles A were replaced by stainless steel particles B.

### [Sample 49]

A resin composition was prepared in the same manner as for Sample 44 except that stainless steel particles A were replaced by stainless steel particles B.

### [Sample 50]

A resin composition was prepared in the same manner as for Sample 45 except that stainless steel particles A were replaced by stainless steel particles B.

### [Sample 51]

A resin composition was prepared in the same manner as for Sample 46 except that stainless steel particles A were replaced by stainless steel particles B.

### [Sample 52]

A resin composition was prepared in the same manner as for Sample 47 except that stainless steel particles A were replaced by stainless steel particles B.

### [Sample 53]

A resin composition was prepared in the same manner as for Sample 43 except that stainless steel particles A were replaced by stainless steel particles C.

### [Sample 54]

A resin composition was prepared in the same manner as for Sample 44 except that stainless steel particles A were replaced by stainless steel particles C.

### [Sample 55]

A resin composition was prepared in the same manner as for Sample 45 except that stainless steel particles A were replaced by stainless steel particles C.

### [Sample 56]

A resin composition was prepared in the same manner as for Sample 46 except that stainless steel particles A were replaced by stainless steel particles C.

### [Sample 57]

A resin composition was prepared in the same manner as for Sample 47 except that stainless steel particles A were replaced by stainless steel particles C.

### [Sample 58]

n-Propyltrimethoxysilane-modified stainless steel particles were produced in the same manner as for Sample 1. Thereafter, 190 g of a photocurable resin (EBECRYL 600), 11 g of n-propyltrimethoxysilane-modified stainless steel particles, and 2.5 g of a photopolymerization initiator (IRGACURE TPO) were mixed to prepare a resin composition.

### [Sample 59]

n-Propyltrimethoxysilane-modified stainless steel particles were produced in the same manner as for Sample 1. Thereafter, 80 g of a photocurable resin (EBECRYL 600), 122 g of n-propyltrimethoxysilane-modified stainless steel particles, and 2.0 g of a photopolymerization initiator (IRGACURE TPO) were mixed to prepare a resin composition.

### [Sample 60]

n-Propyltrimethoxysilane-modified stainless steel particles were produced in the same manner as for Sample 4. Thereafter, 190 g of a photocurable resin (EBECRYL 600), 11 g of n-propyltrimethoxysilane-modified stainless steel particles, and 2.5 g of a photopolymerization initiator (IRGACURE TPO) were mixed to prepare a resin composition.

### [Sample 61]

n-Propyltrimethoxysilane-modified stainless steel particles were produced in the same manner as for Sample 4. Thereafter, 80 g of a photocurable resin (EBECRYL 600), 122 g of n-propyltrimethoxysilane-modified stainless steel particles, and 2.0 g of a photopolymerization initiator (IRGACURE TPO) were mixed to prepare a resin composition.

### [Sample 62]

n-Propyltrimethoxysilane-modified stainless steel particles were produced in the same manner as for Sample 7. Thereafter, 190 g of a photocurable resin (EBECRYL 600), 11 g of n-propyltrimethoxysilane-modified stainless steel particles, and 2.5 g of a photopolymerization initiator (IRGACURE TPO) were mixed to prepare a resin composition.

### [Sample 63]

n-Propyltrimethoxysilane-modified stainless steel particles were produced in the same manner as for Sample 7. Thereafter, 80 g of a photocurable resin (EBECRYL 600), 122 g of n-propyltrimethoxysilane-modified stainless steel particles, and 2.0 g of a photopolymerization initiator (IRGACURE TPO) were mixed to prepare a resin composition.

### 2. Production of Three-dimensional Shaped Object

### (First three-dimensional shaping method (SLA method))

The resin compositions (Samples 1 to 63) were each fed into shaping tank 510 in an apparatus for producing a three-dimensional shaped object, having a structure shown in FIG. 1 (manufactured by XYZprinting, Inc., NOBEL1.0). Then, irradiation with semiconductor laser light (output power: 100 mW, wavelength: 405 nm) from light source 530 and lowering of shaping stage 520 were repeated to give a primary cured product in the shape of the JIS K7161-2 (ISO 527-2) 1A-type specimen. During production, the longitudinal direction of the tensile specimen was made to correspond to the shaping direction (stage lowering direction).

For Samples 1 to 39 and 43 to 63, the primary cured product was taken as the three-dimensional shaped object. Meanwhile, the primary cured product produced by using each of Samples 40 to 42 was washed with isopropyl alcohol, and then heated in an oven at 100°C for an hour, at 150°C for an hour, and at 180°C for an hour to cure the thermally polymerizable resin contained in the primary cured product.

### (Second three-dimensional shaping method (CLIP method))

For producing a three-dimensional shaped object, each resin composition (Samples 40 to 42) 650 was fed into shaping tank 610 of production apparatus 600 shown in FIG. 2A. A 0.0025-inch-thick (0.00635 cm) Teflon (registered trademark) AF2400 film manufactured by Biogeneral Inc. (window part 615), which can allow oxygen, as a polymerization inhibitor, to pass therethrough, is disposed in the bottom part of shaping tank 610. As the atmosphere outside shaping tank 610, an oxygen atmosphere was used, and then, a pressure was moderately applied thereto. This caused formation of buffer region 642 containing resin composition 650 and oxygen on the bottom part side of shaping tank 610, and in the part above buffer region 642, region for curing 644 having an oxygen concentration lower than that of the buffer region was formed.

Stage 620 was elevated while irradiated planarly with light from an ultraviolet light source: LED projector (DLP (VISITECH LE4910H UV-388) manufactured by Texas Instruments Incorporated.). The irradiation intensity of the ultraviolet ray at this time was set to 5 mW/cm². The elevation rate of stage 620 was set to 50 mm/hr. Then, produced was a primary cured product in the shape of the JIS K7161-2 (ISO 527-2) 1A-type specimen. During production, the longitudinal direction of the tensile specimen was made to correspond to the shaping direction (elevation direction for stage 620). The primary cured product obtained was washed with isopropyl alcohol, and then heated in an oven at 100°C for an hour, at 150°C for an hour, and at 180°C for an hour to cure the thermally polymerizable resin contained in the primary cured product.

### 3. Evaluation of Three-dimensional Shaped Object

The three-dimensional shaped object obtained was evaluated with respect to each of the shaping accuracy, detectability by a metal detector, and tensile strength.

### 3-1. Shaping Accuracy

The shaping accuracy of the three-dimensional shaped objects was evaluated by measuring the dimensions of each three-dimensional shaped object. Specifically, the absolute value of the dimensional difference between the right and the left of the width (b2) of the gripping section of the JIS K7161-2 (ISO527-2) 1A-type specimen was defined as B, the absolute value of the dimensional difference between the right and the left of the height (h) thereof was defined as H, and evaluation was performed as follows.
A: B and H are each less than 0.1 mm.
B: Of B and H, either one is less than 0.1 mm, and the other is 0.1 mm or more and less than 0.2 mm.
C: Both of B and H are 0.1 mm or more and less than 0.2 mm.
D: Either one of B and H is 0.2 mm or more, or no shaped object was obtained.

### 3-2. Detectability by Metal Detector

The three-dimensional shaped objects each having a different volume was made to pass through a metal detector (KDS8113BW manufactured by Anritsu Infivis Co., Ltd.). The smallest volume of each three-dimensional shaped object detected was used to evaluate the detectability of the three-dimensional shaped object by a metal detector based on the following criteria.
AA: The smallest volume detected by a metal detector was less than 16 mm³.
A: The smallest volume detected by a metal detector is 16 mm³ or more and less than 24 mm³.
B: The smallest volume detected by a metal detector is 24 mm³ or more and less than 32 mm³.
C: The smallest volume detected by a metal detector is 32 mm³ or more and less than 40 mm³.
D: The smallest volume detected by a metal detector is 40 mm³ or more.

### 3-3. Tensile Strength

A tensile test was performed according to JIS K7161. Specifically, an RTC-1250-type TENSILON manufactured by A&D Company, Limited was used to identify the tensile strength, which was evaluated as follows.
AA: The tensile strength is 60 MPa or more.
A: The tensile strength is 50 MPa or more and less than 60 MPa.
B: The tensile strength is 30 MPa or more and less than 50 MPa.
C: The tensile strength is 10 MPa or more and less than 30 MPa.
D: The tensile strength is less than 10 MPa.

**[Table 1]**

| | | Shaping mode | Resin type | Metal-containing particles | | | | Thickener | Shaping accuracy | Detectability by metal detector | Tensile strength |
|---|---|---|---|---|---|---|---|---|---|---|---|
| | | | | Content*¹ [mass%] | Surface modifier | Average particle size [µm] | Type | | | | |
| Example | Sample 1 | SLA | Photocurable resin (epoxy acrylate) | 10 | n-Propyltrimethoxysilane | 0.02 | Stainless steel | - | B | C | B |
| | Sample 2 | | | 30 | | | | | B | C | B |
| | Sample 3 | | | 50 | | | | | C | B | C |
| | Sample 4 | | | 10 | n-Propyltrimethoxysilane | 0.1 | Stainless steel | - | B | B | B |
| | Sample 5 | | | 30 | | | | | B | B | B |
| | Sample 6 | | | 50 | | | | | C | B | C |
| | Sample 7 | | | 10 | n-Propyltrimethoxysilane | 3 | Stainless steel | - | B | C | B |
| | Sample 8 | | | 30 | | | | | C | C | C |
| | Sample 9 | | | 50 | | | | | C | C | C |
| | Sample 10 | | | 10 | 3-Acryloxypropyl trimethoxysilane | 0.02 | Stainless steel | - | B | C | B |
| | Sample 11 | | | 30 | | | | | B | B | B |
| | Sample 12 | | | 50 | | | | | C | B | C |
| | Sample 13 | | | 10 | 3-Acryloxypropyl trimethoxysilane | 0.1 | Stainless steel | | B | A | B |
| | Sample 14 | | | 30 | | | | | B | A | B |
| | Sample 15 | | | 50 | | | | | C | A | C |
| | Sample 16 | | | 10 | 3-Acryloxypropyl trimethoxysilane | 3 | Stainless steel | - | B | B | B |
| | Sample 17 | | | 30 | | | | | C | B | C |
| | Sample 18 | | | 50 | | | | | C | B | C |

| | | | | | | | | | | | |
|---|---|---|---|---|---|---|---|---|---|---|---|
| *¹ Amount of metal-containing particles based on total amount of photocurable compound and metal-containing particles | | | | | | | | | | | |

**[Table 2]**

| | | Shaping mode | Resin type | Metal-containing particles | | | | Thickener | Shaping accuracy | Detectability by metal detector | Tensile strength |
|---|---|---|---|---|---|---|---|---|---|---|---|
| | | | | Content*¹ [mass%] | Surface modifier | Average particle size [µm] | Type | | | | |
| | Sample 19 | | | 10 | 3-Acryloxypropyl trimethoxysilane | 0.02 | Stainless steel | | B | B | B |
| | Sample 20 | | | 30 | | | | | B | B | B |
| | Sample 21 | | | 50 | | | | | C | B | C |
| | Sample 22 | | | 10 | 3-Acryloxypropyl trimethoxysilane | 0.05 | Stainless steel | | B | A | B |
| | Sample 23 | | | 30 | | | | | B | A | B |
| | Sample 24 | | | 50 | | | | | B | A | B |
| | Sample 25 | | | 10 | 3-Acryloxypropyl trimethoxysilane | 0.1 | Stainless steel | | B | A | B |
| | Sample 26 | | | 30 | | | | | B | A | B |
| | Sample 27 | | | 50 | | | | | B | A | B |
| | Sample 28 | | Photocurable resin (epoxy acrylate) | 10 | 3-Acryloxypropyl trimethoxysilane | 1 | Stainless steel | | B | A | B |
| | Sample 29 | | | 30 | | | | | B | A | B |
| | Sample 30 | SLA | | 50 | | | | | B | A | B |
| | Sample 31 | | | 10 | 3-Acryloxypropyl trimethoxysilane | 3 | Stainless steel | Cellulose nanofiber | B | B | B |
| Example | Sample 32 | | | 30 | | | | | B | B | B |
| | Sample 33 | | | 50 | | | | | C | B | C |
| | Sample 34 | | | 10 | 3-Acryloxypropyl trimethoxysilane | 0.1 | Iron oxide | | B | AA | B |
| | Sample 35 | | | 30 | | | | | B | AA | B |
| | Sample 36 | | | 50 | | | | | B | AA | B |
| | Sample 37 | | | 10 | 3-Acryloxypropyl trimethoxysilane | 0.1 | Pure iron | | B | AA | B |
| | Sample 38 | | | 30 | | | | | B | AA | B |
| | Sample 39 | | | 50 | | | | | B | AA | B |
| | Sample 40 | | Photocurable resin (epoxy acrylate) + Thermally polymerizable resin (epoxy resin) | 10 | 3-Acryloxypropyl trimethoxysilane | 0.1 | Iron oxide | | B | AA | A |
| | Sample 41 | | | 30 | | | | | B | AA | A |
| | Sample 42 | | | 50 | | | | | B | AA | B |
| | Sample 40 | CLIP | | 10 | 3-Acryloxypropyl trimethoxysilane | 0.1 | Iron oxide | | A | AA | AA |
| | Sample 41 | | | 30 | | | | | A | AA | AA |
| | Sample 42 | | | 50 | | | | | A | AA | A |

| | | | | | | | | | | | |
|---|---|---|---|---|---|---|---|---|---|---|---|
| *¹ Amount of metal-containing particles based on total amount of photocurable compound and metal-containing particles | | | | | | | | | | | |

**[Table 3]**

| | | Shaping mode | Resin type | Metal-containing particles | | | | Thickener | Shaping accuracy | Detectability by metal detector | Tensile strength |
|---|---|---|---|---|---|---|---|---|---|---|---|
| | | | | Content*¹ [mass%] | Surface modifier | Average particle size [µm] | Type | | | | |
| | Sample 43 | | | 5 | - | 0.02 | Stainless steel | - | B | D | B |
| | Sample 44 | | | 10 | | | | | B | D | B |
| | Sample 45 | | | 30 | | | | | B | D | B |
| | Sample 46 | | | 50 | | | | | C | D | D |
| | Sample 47 | | | 60 | | | | | D | C | D |
| | Sample 48 | | | 5 | - | 0.1 | Stainless steel | - | B | D | B |
| | Sample 49 | | | 10 | | | | | B | D | B |
| | Sample 50 | | | 30 | | | | | B | D | B |
| | Sample 51 | | | 50 | | | | | C | D | D |
| Comparative Example | Sample 52 | | Photocurable resin (epoxy acrylate) | 60 | | | | | D | C | D |
| | Sample 53 | SLA | | 5 | - | 3 | Stainless steel | - | B | D | B |
| | Sample 54 | | | 10 | | | | | B | D | B |
| | Sample 55 | | | 30 | | | | | C | D | B |
| | Sample 56 | | | 50 | | | | | D | C | D |
| | Sample 57 | | | 60 | | | | | D | C | D |
| | Sample 58 | | | 5 | n-Propyltrimethoxysilane | 0.02 | Stainless steel | - | B | D | B |
| | Sample 59 | | | 60 | | | | | C | C | D |
| | Sample 60 | | | 5 | n-Propyltrimethoxysilane | 0.1 | Stainless steel | - | B | D | B |
| | Sample 61 | | | 60 | | | | | C | C | D |
| | Sample 62 | | | 5 | n-Propyltrimethoxysilane | 3 | Stainless steel | - | B | D | B |
| | Sample 63 | | | 60 | | | | | C | C | D |

| | | | | | | | | | | | |
|---|---|---|---|---|---|---|---|---|---|---|---|
| *¹ Amount of metal-containing particles based on total amount of photocurable compound and metal-containing particles | | | | | | | | | | | |

As shown in Tables 1 to 3 described above, in the resin compositions each containing a photocurable compound and metal-containing particles, when the metal-containing particles were not surface-modified with a surface modifier (Samples 43 to 57), the detectability by a metal detector was extremely poor. The metal-containing particles sedimented and aggregated in each resin composition, and thus, it is assumed that the metal-containing particles were sparsely dispersed in a three-dimensional shaped object to be obtained. With an increase in the amount of the metal-containing particles, it is assumed that the viscosity of the resin composition increased and sedimentation and aggregation of the metal-containing particles were suppressed. However, an increase in the viscosity of the resin composition made air more likely to be mixed into the resin composition to thereby reduce the shaping accuracy or reduce the tensile strength (Samples 47, 52, and 57).

In contrast, even when the photocurable compound and metal-containing particles were contained and the metal-containing particles was surface-modified with a surface modifier, in the case where the amount of the metal-containing particles was extremely small (Samples 58, 60, and 62), the region containing no metal-containing particles became broader in the three-dimensional shaped object, and the detectability of a metal detector was reduced. Meanwhile, when the amount of the metal-containing particles was extremely large (Samples 59, 61, and 63), although the metal detectability was enhanced, the increase in the viscosity of the resin composition made air more likely to be mixed into the resin composition to thereby reduce the shaping accuracy or reduce the tensile strength.

Meanwhile, when the photocurable compound and metal-containing particles were contained, the metal-containing particles were surface-modified with a surface modifier, and additionally, the amount of the metal-containing particles was 10 to 50 mass% based on the amount of the photocurable compound, there was obtained a three-dimensional shaped object having all of the detectability by a metal detector, shaping accuracy, and tensile strength (Samples 1 to 42). When these resin compositions contained cellulose nanofibers, the viscosity of the resin composition was moderately enhanced, and the cellulose nanofibers dispersed in the resin composition and the metal-containing particles were interacted with each other, so that the dispersibility of the metal-containing particles was enhanced, and the metal detectability markedly increased (Samples 19 to 42).

When the metal-containing particles were of iron oxide or pure iron, the detectability by a metal detector was markedly enhanced (Samples 34 to 42). When a thermosetting resin was contained together with the photocurable resin, the tensile strength and the shaping accuracy were enhanced in producing a three-dimensional shaped object by the CLIP method (Samples 40 to 42).

### Industrial Applicability

According to the resin composition used in the present invention, it is possible to produce a three-dimensional shaped object having a high tensile strength and dimensional accuracy and additionally being easily detected by a metal detector. Accordingly, the present invention is expected to broaden applications of three-dimensional shaped objects including the resin composition and to contribute to development and proliferation of the techniques of the field.

### Reference Signs List

300 Industrial robot
310 Object
320 Conveying section
330 Arm section
331 Attachment
340 Metal detecting section
500, 600 Production apparatus
510, 610 Shaping tank
615 Window part
520, 620 Stage
521 Base
530, 630 Light source
531 Galvano mirror
642 Buffer region
644 Region for curing
550, 650 Resin composition
651 Cured product

## Claims

1. An object-gripping attachment (331), capable of being detachably attached to an arm section (330) of an industrial robot (300) and comprising a three-dimensional shaped object,
wherein the three-dimensional shaped object is a cured product (651) of a resin composition (550, 650) configured for producing the three-dimensional shaped object by selectively irradiating the liquid resin composition (550, 650) with an active energy ray,
**characterized in that** the resin composition (550, 650) comprises (i) a photocurable compound and (ii) metal-containing particles that are detectable by a metal detector and are surface-modified with a surface modifier, and
wherein a content of the metal-containing particles is 10 mass% or more and 55 mass% or less based on the solid content of the resin composition (550, 650), the solid content of the resin composition (550, 650) meaning the total amount of components which remain in the resin composition (550, 650) when the resin composition (550, 650) is cured.

2. The object-gripping attachment (331) according to claim 1, wherein the surface modifier is a silane coupling agent.

3. The object-gripping attachment (331) according to claim 1 or 2, wherein the resin composition (550, 650) further comprises at least one thickener selected from the group consisting of clay minerals, cellulose nanofibers, and cellulose nanocrystals.

4. The object-gripping attachment (331) according to any one of claims 1 to 3, wherein an average particle size of the metal-containing particles as measured by a dynamic scattering method is 0.05 µm or more and less than 1 µm.

5. The object-gripping attachment (331) according to any one of claims 1 to 4, wherein the metal-containing particles comprise pure iron or iron oxide.

6. The object-gripping attachment (331) according to any one of claims 1 to 5, wherein the resin composition (550, 650) further comprises a thermally polymerizable compound.

7. The object-gripping attachment (331) according to any one of claims 1 to 6, wherein the three-dimensional shaped object comprises no layered structure.

8. An industrial robot (300) comprising:
a conveying section (320) that conveys an object (310);
an arm section (330) that grips and operates the object (310) conveyed by the conveying section (320); and
a metal detecting section (340) that inspects the object (310) operated by the arm section (330),
wherein the object-gripping attachment (331) according to any one of claims 1 to 7 is detachably attached to the arm section (330).

## Patentansprüche

1. Aufsatz zum Greifen eines Objekts (331), welcher abnehmbar an einem Armabschnitt (330) eines Industrieroboters (300) angebracht werden kann und ein dreidimensional geformtes Objekt umfasst,
wobei es sich bei dem dreidimensional geformten Objekt um ein gehärtetes Produkt (651) einer Harzzusammensetzung (550, 650) handelt, welche zur Herstellung des dreidimensional geformten Objekts durch selektives Bestrahlen der flüssigen Harzzusammensetzung (550, 650) mit einem aktiven Energiestrahl konfiguriert ist,
**dadurch gekennzeichnet, dass** die Harzzusammensetzung (550, 650) (i) eine photohärtbare Verbindung und (ii) metallhaltige Partikel umfasst, welche mithilfe eines Metalldetektors detektiert werden können und mit einem Oberflächenmodifizierungsmittel oberflächenmodifiziert sind, und
wobei der Gehalt an metallhaltigen Partikeln 10 Masse% oder mehr und 55 Masse% oder weniger, bezogen auf den Feststoffgehalt der Harzzusammensetzung (550, 650), beträgt, wobei der Feststoffgehalt der Harzzusammensetzung (550, 650) die Gesamtmenge an Komponenten bezeichnet, welche nach dem Härten der Harzzusammensetzung (550, 650) in der Harzzusammensetzung (550, 650) verbleiben.

2. Aufsatz zum Greifen eines Objekts (331) gemäß Anspruch 1, wobei es sich bei dem Oberflächenmodifizierungsmittel um ein Silankopplungsmittel handelt.

3. Aufsatz zum Greifen eines Objekts (331) gemäß Anspruch 1 oder 2, wobei die Harzzusammensetzung (550, 650) weiterhin zumindest ein Verdickungsmittel ausgewählt aus der Gruppe bestehend aus Tonmineralien, Cellulosenanofasern und Cellulosenanokristallen umfasst.

4. Aufsatz zum Greifen eines Objekts (331) gemäß einem der Ansprüche 1 bis 3, wobei die mithilfe eines dynamischen Streuverfahrens gemessene mittlere Partikelgröße der metallhaltigen Partikel 0.05 µm oder mehr und weniger als 1 µm beträgt.

5. Aufsatz zum Greifen eines Objekts (331) gemäß einem der Ansprüche 1 bis 4, wobei die metallhaltigen Partikel reines Eisen oder Eisenoxid umfassen.

6. Aufsatz zum Greifen eines Objekts (331) gemäß einem der Ansprüche 1 bis 5, wobei die Harzzusammensetzung (550, 650) weiterhin eine thermisch polymerisierbare Verbindung umfasst.

7. Aufsatz zum Greifen eines Objekts (331) gemäß einem der Ansprüche 1 bis 6, wobei das dreidimensional geformte Objekt keine Schichtstruktur umfasst.

8. Industrieroboter (300), umfassend:
einen Transportabschnitt (320), welcher ein Objekt (310) transportiert;
einen Armabschnitt (330), welcher das von dem Transportabschnitt (320) transportierte Objekt (310) ergreift und steuert; und
einen Metalldetektionsabschnitt (340), welcher das von dem Armabschnitt (330) gesteuerte Objekt (310) inspiziert,
wobei der Aufsatz zum Greifen eines Objekts (331) gemäß einem der Ansprüche 1 bis 7 abnehmbar an dem Armabschnitt (330) angebracht ist.

## Revendications

1. Accessoire de saisie d'objet (331), capable d'être raccordé de manière amovible à une section de bras (330) d'un robot industriel (300) et comprenant un objet de forme tridimensionnelle,
dans lequel l'objet de forme tridimensionnelle est un produit durci (651) d'une composition de résine (550, 650) configurée pour produire l'objet de forme tridimensionnelle par l'exposition sélective à un rayonnement de la composition de résine liquide (550, 650) avec un rayon d'énergie active,
**caractérisé en ce que**
la composition de résine (550, 650) comprend (i) un composé photodurcissable et (ii) des particules contenant un métal qui sont détectables par un détecteur de métal et sont à surface modifiée avec un modificateur de surface, et
dans lequel une teneur en particules contenant un métal est supérieure ou égale à 10 % en masse et inférieure ou égale à 55 % en masse sur la base de la teneur en solides de la composition de résine (550, 650), la teneur en solides de la composition de résine (550, 650) signifiant la quantité totale de composants qui restent dans la composition de résine (550, 650) lorsque la composition de résine (550, 650) est durcie.

2. Accessoire de saisie d'objet (331) selon la revendication 1, dans lequel le modificateur de surface est un agent de couplage silane.

3. Accessoire de saisie d'objet (331) selon la revendication 1 ou 2, dans lequel la composition de résine (550, 650) comprend en outre au moins un épaississant sélectionné dans le groupe consistant en minéraux argileux, nanofibres de cellulose, et nanocristaux de cellulose.

4. Accessoire de saisie d'objet (331) selon l'une quelconque des revendications 1 à 3, dans lequel une taille de particule moyenne des particules contenant un métal telle que mesurée par un procédé de diffusion dynamique est supérieure ou égale à 0,05 µm et inférieure à 1 µm.

5. Accessoire de saisie d'objet (331) selon l'une quelconque des revendications 1 à 4, dans lequel les particules contenant un métal comprennent du fer pur ou de l'oxyde de fer.

6. Accessoire de saisie d'objet (331) selon l'une quelconque des revendications 1 à 5, dans lequel la composition de résine (550, 650) comprend en outre un composé thermiquement polymérisable.

7. Accessoire de saisie d'objet (331) selon l'une quelconque des revendications 1 à 6, dans lequel l'objet de forme tridimensionnelle ne comprend aucune structure stratifiée.

8. Robot industriel (300) comprenant :
une section de transport (320) qui transporte un objet (310) ;
une section de bras (330) qui saisit et met en action l'objet (310) transporté par la section de transport (320) ; et
une section de détection de métal (340) qui inspecte l'objet (310) mis en action par la section de bras (330),
dans lequel l'accessoire de saisie d'objet (331) selon l'une quelconque des revendications 1 à 7 est raccordé de manière amovible à la section de bras (330).
